(19) Europäisches Patentamt
European Patent Office
Office européen des brevets

(11) EP 4 363 814 B1

(12) FASCICULE DE BREVET EUROPEEN

(45) Date de publication et mention de la délivrance du brevet:
**06.08.2025 Bulletin 2025/32**

(21) Numéro de dépôt: **22738737.0**

(22) Date de dépôt: **20.06.2022**

(51) Classification Internationale des Brevets (IPC):
***G01J 3/02** (2006.01)* ***G01J 3/08** (2006.01)*
***G01J 3/10** (2006.01)*

(52) Classification Coopérative des Brevets (CPC):
**G01J 3/433; G01J 3/0229; G01J 3/0262; G01J 3/08; G01J 3/10;** G01J 2001/4242

(86) Numéro de dépôt international:
**PCT/IB2022/055691**

(87) Numéro de publication internationale:
**WO 2023/275662 (05.01.2023 Gazette 2023/01)**

(54) **ENSEMBLE SPECTROMÈTRE SYNCHRONE À PHASES MULTIPLES APPLIQUÉ À UNE SOURCE MODULÉE DE RAYONNEMENT OPTIQUE À PLUSIEURS LONGUEURS D'ONDE, PROCÉDÉS ET UTILISATIONS ASSOCIÉS**

MEHRPHASIGE SYNCHRONE SPEKTROMETERANORDNUNG FÜR EINE MODULIERTE QUELLE OPTISCHER STRAHLUNG MIT MEHREREN WELLENLÄNGEN SOWIE ZUGEHÖRIGE VERFAHREN UND VERWENDUNGEN

MULTIPHASE SYNCHRONOUS SPECTROMETER ASSEMBLY APPLIED TO A MODULATED SOURCE OF MULTI-WAVELENGTH OPTICAL RADIATION, AND ASSOCIATED METHODS AND USES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2021 FR 2106958**

(43) Date de publication de la demande:
**08.05.2024 Bulletin 2024/19**

(73) Titulaire: **Centre Scientifique et Technique du Batiment**
**77420 Champs sur Marne (FR)**

(72) Inventeur: **MARTINSONS, Christophe**
**38660 Le Touvet (FR)**

(74) Mandataire: **Cabinet Chaillot**
**16/20, avenue de l'Agent Sarre**
**B.P. 74**
**92703 Colombes Cedex (FR)**

(56) Documents cités:
**WO-A2-2006/135389 US-B2- 9 869 632**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 363 814 B1

## Description

La présente invention concerne le domaine technique des mesures optiques par spectrométrie et concerne plus particulièrement un ensemble spectromètre à phases multiples et des utilisations associées.

La spectrométrie synchrone permet de détecter uniquement la composante alternative du spectre d'un rayonnement optique émis par une source modulée. Cette technique a notamment pour avantage de permettre de s'affranchir d'un rayonnement optique ambiant parasite ou de la lumière du jour, lors des mesures. Le document US9869632 B2 présente un exemple de l'état de la technique.

Cette technique est, par exemple, mise en œuvre à l'aide d'un spectromètre à balayage à faisceau modulé associé à un amplificateur synchrone et nécessite alors l'utilisation d'un monochromateur ou d'un filtre spectral pour diviser la lumière poly-chromatique collectée en faisceaux lumineux monochromatiques. Cela implique donc pour chaque mesure un balayage du spectre, longueur d'onde par longueur d'onde, et une détection synchrone électrique à chaque longueur d'onde. La spectrométrie à balayage et à faisceau modulé est une technique précise très utilisée en laboratoire mais a pour inconvénients d'être longue et difficilement transportable pour des mesures hors laboratoire.

Par conséquent, les solutions de l'art antérieur présentent toujours des inconvénients et des améliorations sont possibles.

La présente invention a notamment pour objectif de proposer un ensemble spectromètre qui utilise la modulation temporelle d'un rayonnement optique à analyser pour mesurer sa distribution spectrale de puissance, ou spectre.

Un autre objectif de l'invention est d'utiliser la fréquence de modulation du rayonnement optique à analyser.

Un autre objectif de l'invention est d'utiliser une fréquence harmonique à la fréquence de modulation du rayonnement optique à analyser.

Un autre objectif de l'invention est de proposer une ensemble spectromètre qui met en œuvre une détection synchrone purement optique.

Un autre objectif de l'invention est de proposer un ensemble spectromètre synchrone à phases multiples configuré pour permettre une détection synchrone simultanément sur toutes les longueurs d'onde d'un rayonnement optique.

Un autre objectif de l'invention est de permettre l'utilisation d'un, de deux ou de quatre spectromètres compacts peu onéreux pour permettre la parallélisation du traitement synchrone.

Un autre objectif de l'invention est de permettre une mesure d'un spectre complexe composé d'un spectre d'amplitude et d'un spectre de phase.

Un autre objectif de l'invention est de proposer un ensemble spectromètre configuré pour mettre en œuvre une technique de spectroscopie d'absorption optique différentielle (DOAS, acronyme de l'anglais Differential Optical Absorption Spectroscopy) pour mesurer la concentration d'au moins un élément présent dans de l'air.

Un autre objectif de l'invention est de proposer un ensemble spectromètre configuré pour effectuer des mesures de concentration de $NO_2$ dans l'air.

Un autre objectif de l'invention est de proposer un ensemble spectromètre configuré pour effectuer des mesures de turbidité de l'air.

Un autre objectif de l'invention est de proposer un ensemble spectromètre configuré pour utiliser un élément d'éclairage disposé dans l'environnement comme source de rayonnement optique.

Ainsi, la présente invention a pour objet un ensemble spectromètre synchrone à phases multiples appliqué à une source modulée de rayonnement optique à plusieurs longueurs d'onde, ledit ensemble spectromètre comprenant un ensemble collecte configuré pour collecter un rayonnement optique à plusieurs longueurs d'onde émis par la source modulée, caractérisé par le fait que l'ensemble collecte comprend au moins une optique de collecte et est configuré pour délivrer en sortie au moins deux faisceaux de rayonnement optique sources identiques ; l'ensemble spectromètre comprend un ensemble synchronisation configuré pour générer au moins un signal de référence sur la base de la phase et de la fréquence de modulation du rayonnement optique émis par la source de rayonnement optique, deux spectromètres, un ensemble modulation configuré pour contrôler, sur la base de l'au moins un signal de référence, une acquisition par chaque spectromètre d'une pluralité de spectres, les spectres comprenant des informations pour au moins une plage de longueurs d'onde des longueurs d'onde du rayonnement optique, chaque spectre étant mesuré sur N sections temporelles de faisceau de rayonnement optique source, N étant un entier supérieur ou égal à un, chaque section temporelle ayant une durée correspondant à une période $\frac{1}{f_m}$ et étant espacée d'une section temporelle de même type d'une période $\frac{1}{f_m}$, $f_m$ étant une fréquence utilisée pour commander l'ensemble modulation obtenue à partir de l'au moins un signal de référence ; un premier spectromètre est configuré pour acquérir des spectres ($I_i(\lambda)$, avec $i \in \{1, .., N\}$) sur des premières sections temporelles, d'un premier faisceau de rayonnement optique source, dites en phase par rapport au

rayonnement optique collecté par l'ensemble collecte ; un second spectromètre est configuré pour acquérir des spectres ($Q_i(\lambda)$, avec $i \in \{1, .., N\}$) sur des secondes sections temporelles, d'un deuxième faisceau de rayonnement optique source, en quadrature de phase par rapport aux premières sections temporelles ; le premier spectromètre est configuré pour mesurer, sans recours à l'ensemble modulation, une quantité spectrale du premier faisceau de rayonnement optique source ($I_0(\lambda)$) ; le second spectromètre est configuré pour mesurer, sans recours à l'ensemble modulation, une quantité spectrale du deuxième faisceau de rayonnement optique source ($Q_0(\lambda)$) ; l'ensemble spectromètre comprend une unité de filtrage passe-bas configurée pour être appliquée aux spectres ($I_i(\lambda)$, avec $i \in \{1, .., N\}$) afin d'obtenir un spectre ($I(\lambda)$), et pour être appliquée aux spectres ($Q_i(\lambda)$, avec $i \in \{1, .., N\}$) afin d'obtenir un spectre ($Q(\lambda)$) ; et l'ensemble spectromètre comprend une unité de calcul configurée pour calculer un spectre d'amplitude ($R(\lambda)$) et un spectre de phase ($\theta(\lambda)$) du rayonnement optique collecté par l'ensemble collecte à l'aide des formules suivantes :

$$R(\lambda) = \sqrt{\left(I(\lambda) - \frac{1}{2}I_0(\lambda)\right)^2 + \left(Q(\lambda) - \frac{1}{2}Q_0(\lambda)\right)^2}$$

et

$$\Theta(\lambda) = \arctan\left(\frac{Q(\lambda) - \frac{1}{2}Q_0(\lambda)}{I(\lambda) - \frac{1}{2}I_0(\lambda)}\right)$$

Selon ce mode de réalisation, l'ensemble spectromètre comprend deux spectromètres, de préférence identiques. De manière préférée, chaque spectromètre est étalonné avant les mesures en réalisant un étalonnage du rendement quantique et un étalonnage du courant d'obscurité.

L'ensemble spectromètre synchrone à phases multiples utilise la modulation temporelle du rayonnement optique à analyser pour mesurer sa distribution spectrale de puissance, c'est-à-dire son « spectre ».

L'ensemble spectromètre synchrone à phases multiples met en œuvre une détection synchrone purement optique, sans recours à un amplificateur synchrone électronique, en synchronisant plusieurs spectromètres, de préférence identiques, en quadrature de phase sur la modulation temporelle de la source de rayonnement optique.

Selon l'invention, la mention « sans recours à l'ensemble modulation » fait référence au fait que la mesure est réalisée à l'aide d'un spectromètre sur un faisceau de rayonnement optique source intact, c'est-à-dire non altéré par l'ensemble modulation, lorsque l'ensemble modulation est réglé en position « passante ».

Le spectre mesuré est un spectre complexe, composé d'un spectre d'amplitude $R(\lambda)$, représentant l'amplitude de rayonnement optique de chaque composante spectrale, du rouge au bleu pour la lumière visible, et d'un spectre de phase $\theta(\lambda)$ représentant une phase relative, représentative d'un retard temporel, de chaque composante spectrale par rapport à une composante de référence.

Le spectre d'amplitude $R(\lambda)$ est lié à l'intensité des composantes spectrales, comme le spectre « classique » mesuré sans détection synchrone. Cependant la mesure en mode synchrone permet de rejeter un rayonnement qui n'est pas modulé à la fréquence utilisée pour commander l'ensemble modulation, comme par exemple un rayonnement naturel, un rayonnement de fond, ou une lumière parasite.

Le spectre de phase $\theta(\lambda)$ mesure le décalage temporel des différentes longueurs d'onde du rayonnement optique émis. Pour la lumière, il comporte des informations sur la dynamique de la production de lumière comme par exemple l'excitation et la désexcitation des luminophores des DEL.

Le spectre de phase $\theta(\lambda)$ comporte aussi des informations sur les différences de propagation observées le long du chemin optique entre la source de rayonnement optique et le système de détection, selon les différentes longueurs d'onde.

Le spectre de phase $\theta(\lambda)$ constitue une signature de la source de rayonnement optique, porteuse d'informations complémentaires au spectre d'amplitude $R(\lambda)$.

Il est en outre possible de mesurer le spectre d'amplitude $R(\lambda)$ et le spectre de phase $\theta(\lambda)$ à différentes fréquences de modulation afin d'obtenir des informations supplémentaires.

L'unité de filtrage passe-bas est soit physique, le filtrage passe-bas est alors obtenu par l'accumulation de charges photoélectriques dans les éléments photosensibles du détecteur de chaque spectromètre pendant un temps d'acquisition, soit fait appel à des calculs par un filtrage numérique passe-bas des N spectres i. Un exemple de filtre numérique passe-bas peut consister à réaliser une moyenne sur les N spectres i.

On comprendra que de manière préférée le nombre N de sections temporelles utilisées pour mesurer les

spectres I(λ) et Q(λ) est identique, mais que des nombres de sections temporelles différents pour I(λ) et Q(λ) peuvent être utilisés selon des variantes.

La fréquence $f_m$ a typiquement une valeur de 100Hz, sans que l'invention soit limitée à cet égard.

La présente invention a également pour objet un ensemble spectromètre synchrone à phases multiples appliqué à une source modulée de rayonnement optique à plusieurs longueurs d'onde, ledit ensemble spectromètre comprenant un ensemble collecte configuré pour collecter un rayonnement optique à plusieurs longueurs d'onde émis par la source modulée, caractérisé par le fait que l'ensemble collecte comprend au moins une optique de collecte et est configuré pour délivrer en sortie au moins un faisceau de rayonnement optique source ; l'ensemble spectromètre comprend un ensemble synchronisation configuré pour générer un signal de référence sur la base de la phase et de la fréquence de modulation du rayonnement optique émis par la source de rayonnement optique, un seul spectromètre, un ensemble modulation configuré pour contrôler, sur la base du signal de référence, une acquisition par le spectromètre d'une pluralité de spectres, les spectres comprenant des informations pour au moins une plage de longueurs d'onde des longueurs d'onde du rayonnement optique, chaque spectre étant mesuré sur N sections temporelles de faisceau de rayonnement optique source, N étant un entier supérieur ou égal à un, chaque section temporelle ayant une durée correspondant à une période $\frac{1}{f_m}$ et étant espacée d'une section temporelle de même type d'une période $\frac{1}{f_m}$, avec $f_m$ une fréquence utilisée pour commander l'ensemble modulation obtenue à partir du signal de référence ; le spectromètre est configuré pour acquérir des spectres ($I_i(\lambda)$, avec $i \in \{1, .., N\}$) sur des premières sections temporelles, d'un premier faisceau de rayonnement optique source, dites en phase par rapport au rayonnement optique collecté par l'ensemble collecte, puis des spectres ($Q_i(\lambda)$, avec $i \in \{1, .., N\}$) sur des secondes sections temporelles, du premier faisceau de rayonnement optique source, en quadrature de phase par rapport aux premières sections temporelles ; le spectromètre est configuré pour réaliser successivement au moins une fois les acquisitions des spectres ($I_i(\lambda)$, avec $i \in \{1, .., N\}$) sur les premières sections temporelles et des spectres ($Q_i(\lambda)$, avec $i \in \{1, .., N\}$) sur les secondes sections temporelles ; le spectromètre est configuré pour mesurer, sans recours à l'ensemble modulation, une quantité spectrale du premier faisceau de rayonnement optique source ($I_0(\lambda) = Q_0(\lambda)$) ; l'ensemble spectromètre comprend une unité de filtrage passe-bas configurée pour être appliquée aux spectres ($I_i(\lambda)$, avec $i \in \{1, .., N\}$) afin d'obtenir un spectre (I(λ)), et pour être appliquée aux spectres ($Q_i(\lambda)$, avec $i \in \{1, .., N\}$) afin d'obtenir un spectre (Q(λ)) ; et l'ensemble spectromètre comprend une unité de calcul configurée pour calculer un spectre d'amplitude (R(λ)) et un spectre de phase (θ(λ)) du rayonnement optique collecté par l'ensemble collecte à l'aide des formules suivantes :

$$R(\lambda) = \sqrt{\left(I(\lambda) - \tfrac{1}{2}I_0(\lambda)\right)^2 + \left(Q(\lambda) - \tfrac{1}{2}Q_0(\lambda)\right)^2}$$

et

$$\Theta(\lambda) = \arctan\left(\frac{Q(\lambda) - \frac{1}{2}Q_0(\lambda)}{I(\lambda) - \frac{1}{2}I_0(\lambda)}\right)$$

Ce mode de réalisation est une adaptation du mode de réalisation précédent permettant d'utiliser un seul spectromètre, tout en bénéficiant des mêmes avantages que le mode de réalisation précédent. Ce mode de réalisation est cependant plus sensible à la stabilité du rayonnement optique collecté en raison du fait que les acquisitions effectuées pour les spectres I(λ) et pour les spectres Q(λ) ne peuvent pas être réalisées simultanément mais doivent être réalisées de manière successive.

De manière préférée, le spectromètre est étalonné avant les mesures en réalisant un étalonnage du rendement quantique et un étalonnage du courant d'obscurité.

La présente invention a également pour objet un ensemble spectromètre synchrone à phases multiples appliqué à une source modulée de rayonnement optique à plusieurs longueurs d'onde, ledit ensemble spectromètre comprenant un ensemble collecte configuré pour collecter un rayonnement optique à plusieurs longueurs d'onde émis par la source modulée, caractérisé par le fait que l'ensemble collecte comprend au moins une optique de collecte et est configuré pour délivrer en sortie au moins quatre faisceaux de rayonnement optique sources identiques ; l'ensemble spectromètre comprend un ensemble synchronisation configuré pour générer au moins un signal de référence sur la base de la phase et de la fréquence de modulation du rayonnement optique émis par la source de rayonnement optique, quatre spectromètres, un ensemble modulation configuré pour contrôler, sur la base de l'au moins un signal de référence, une acquisition par chaque spectromètre d'une pluralité de spectres, les spectres comprenant des informations pour au moins une plage de longueurs d'onde des longueurs d'onde du rayonnement optique, chaque spectre étant mesuré sur N sections temporelles de faisceau de rayonnement optique source, N étant un entier supérieur ou égal à un, chaque section temporelle ayant une durée correspondant à une période $\frac{1}{f_m}$ et étant espacée d'une section temporelle de même type d'une période $\frac{1}{f_m}$, avec $f_m$ une fréquence utilisée pour commander l'ensemble modulation obtenue à partir de l'au moins un signal de référence ; un premier spectromètre est configuré pour acquérir des spectres ($I_{1i}(\lambda)$, avec $i \in \{1, .., N\}$) sur des premières sections temporelles, d'un premier faisceau de rayonnement optique source, dites en phase par rapport au rayonnement optique collecté par l'ensemble collecte ; un deuxième spectromètre est configuré pour acquérir des spectres ($Q_{1i}(\lambda)$, avec $i \in \{1, .., N\}$) sur des deuxièmes sections temporelles, d'un deuxième faisceau de rayonnement optique source, en quadrature de phase et en avance de phase par rapport aux premières sections temporelles ; un troisième spectromètre est configuré pour acquérir des spectres ($I_{2i}(\lambda)$, avec $i \in \{1, .., N\}$) sur des troisièmes sections temporelles, d'un troisième faisceau de rayonnement optique source, en quadrature de phase et en avance de phase par rapport aux deuxièmes sections temporelles ; un quatrième spectromètre est configuré pour acquérir des spectres ($Q_{2i}(\lambda)$, avec $i \in \{1, .., N\}$) sur des quatrièmes sections temporelles, d'un quatrième faisceau de rayonnement optique source, en quadrature de phase et en avance de phase par rapport aux troisièmes sections temporelles ; l'ensemble spectromètre comprend une unité de filtrage passe-bas configurée pour être appliquée aux spectres ($I_{1i}(\lambda)$, avec $i \in \{1, .., N\}$) afin d'obtenir un spectre ($I_1(\lambda)$), pour être appliquée aux spectres ($Q_{1i}(\lambda)$, avec $i \in \{1, .., N\}$) afin d'obtenir un spectre ($Q_1(\lambda)$), pour être appliquée aux spectres ($I_{2i}(\lambda)$, avec $i \in \{1, .., N\}$) afin d'obtenir un spectre ($I_2(\lambda)$), et pour être appliquée aux spectres ($Q_{2i}(\lambda)$, avec $i \in \{1, .., N\}$) afin d'obtenir un spectre ($Q_2(\lambda)$) ; et l'ensemble spectromètre comprend une unité de calcul configurée pour calculer un spectre d'amplitude ($R(\lambda)$) et un spectre de phase ($\theta(\lambda)$) du rayonnement optique collecté par l'ensemble collecte à l'aide des formules suivantes :

$$R(\lambda) = \sqrt{(I_1(\lambda) - I_2(\lambda))^2 + (Q_1(\lambda) - Q_2(\lambda))^2}$$

et

$$\Theta(\lambda) = \arctan\left(\frac{Q_1(\lambda) - Q_2(\lambda)}{I_1(\lambda) - I_2(\lambda)}\right)$$

Ce mode de réalisation est une adaptation des modes de réalisation précédents permettant d'utiliser un ensemble modulation dit « imparfait » qui ne module pas à cent pour cent un faisceau de rayonnement optique source, tout en bénéficiant des mêmes avantages que les modes de réalisations précédents. Un ensemble modulation dit « imparfait » peut par exemple faire appel à des modulateurs électro-optiques ou à des modulateurs acousto-optiques utilisés pour les fibres optiques télécom. Ces modulateurs optiques présentent les avantages d'être plus compacts et plus robustes que des modulateurs mécaniques, tels que les hacheurs, ou « choppers » en anglais.

En contrepartie, ce mode de réalisation nécessite l'utilisation de quatre spectromètres, de préférence identiques. De manière préférée, chaque spectromètre est étalonné avant les mesures en réalisant un étalonnage du rendement quantique et un étalonnage du courant d'obscurité.

Selon un mode de réalisation, l'ensemble collecte comprend en outre un ensemble division de faisceau de rayonnement optique.

L'utilisation d'un ensemble division de faisceau de rayonnement optique permet de diviser un faisceau de rayonnement optique collecté à l'aide de l'ensemble collecte en autant de faisceaux de rayonnement optique sources que cela est nécessaire.

Selon un mode de réalisation, l'ensemble collecte comprend au moins autant d'optiques de collecte configurées pour collecter le rayonnement optique émis par la source de rayonnement optique qu'il y a de spectromètres.

Ce mode de réalisation permet par exemple d'utiliser une optique de collecte dédiée pour obtenir chaque faisceau de rayonnement optique source.

Selon un mode de réalisation, au moins l'une des optiques de collecte est choisie parmi un télescope, une sphère

d'intégration, un objectif photographique, une lentille convergente, une cellule de mesure d'éclairement et une cellule de mesure de luminance.

Les optiques de collecte listées ci-dessus représentent des optiques de collecte « classiques » particulièrement adaptées pour la collecte d'un rayonnement optique dans différentes conditions. On comprendra cependant qu'en variante l'ensemble spectromètre peut utiliser tout type d'optique de collecte apte à collecter un rayonnement optique.

Selon un mode de réalisation, l'ensemble modulation comprend au moins un modulateur optique, l'au moins un modulateur optique étant de préférence choisi parmi un modulateur mécanique, un modulateur électro-optique et un modulateur acousto-optique.

L'utilisation de modulateurs optiques dits « imparfaits », qui ne modulent pas à cent pour cent un faisceau de rayonnement optique, est de préférence réservée au mode de réalisation à quatre spectromètres. Les modulateurs électro-optiques peuvent par exemple être des cellules de Pockels. Les modulateurs acousto-optiques peuvent par exemple être des cellules de Bragg. De préférence, les modes de réalisation à un ou deux spectromètres utilisent des modulateurs optiques configurés pour moduler à cent pour cent un faisceau de rayonnement optique. Un exemple de modulateur optique de ce type est un modulateur mécanique, hacheur rotatif ou « chopper ».

Selon un mode de réalisation, l'ensemble modulation est intégré dans chaque spectromètre et est configuré pour contrôler l'acquisition de chaque spectromètre à l'aide d'un signal de déclenchement.

Dans ce mode de réalisation, l'ensemble synchronisation délivre directement un signal de référence à l'ensemble modulation intégré dans chaque spectromètre qui génère un signal de déclenchement configuré pour commander une acquisition de chaque spectromètre sur chaque section temporelle souhaitée.

Selon un mode de réalisation, l'ensemble modulation est configuré pour utiliser la fréquence de modulation du rayonnement optique émis par la source de rayonnement optique comme fréquence de commande $f_m$.

Selon un mode de réalisation, l'ensemble modulation est configuré pour utiliser une fréquence harmonique de la fréquence de modulation du rayonnement optique émis par la source de rayonnement optique comme fréquence de commande $f_m$, de telle sorte que le spectre d'amplitude ($R(\lambda)$) et le spectre de phase ($\theta(\lambda)$) caractérisent la non-linéarité d'un milieu se trouvant entre la source de rayonnement optique et l'ensemble collecte.

La fréquence harmonique utilisée peut par exemple être la fréquence double ou la fréquence triple de la fréquence de modulation du rayonnement optique émis par la source de rayonnement optique. Le milieu peut par exemple être un solide, un liquide ou un gaz.

Ce mode de réalisation peut, par exemple, être utilisé pour une caractérisation de cristaux optiques non-linéaires, de semi-conducteurs ou de milieux biologiques. Dans le domaine de l'éclairage, ce mode de réalisation peut, par exemple, permettre d'étudier un comportement non linéaire de luminophores de DEL en fonctionnement. Cette fonctionnalité est très utile en contrôle non destructif.

Selon un mode de réalisation, l'ensemble synchronisation comprend un générateur de signal générant l'au moins un signal de référence en fonction de l'alimentation électrique de la source de rayonnement optique.

Ce mode de réalisation permet d'obtenir la phase et la fréquence de modulation du rayonnement optique émis par la source de rayonnement optique en connaissant la source d'alimentation électrique alternative, ce qui permet de s'affranchir de mesures sur le rayonnement optique pour générer le ou les signaux de référence. Il est par exemple possible d'utiliser, comme signal de référence, un signal à la fréquence double du courant alternatif d'alimentation de la source optique modulée. Par exemple, en France pour un courant secteur à 50 Hz, la modulation temporelle d'une source de rayonnement optique, par exemple une DEL ou une lampe à décharge, comprend une composante harmonique à 50 x 2 = 100 Hz.

Selon un mode de réalisation, l'ensemble spectromètre comprend en outre un ensemble détection optique configuré pour mesurer en temps réel la fréquence de modulation et la phase du rayonnement optique émis par la source de rayonnement optique, et l'ensemble synchronisation est relié à l'ensemble détection optique de façon à générer l'au moins un signal de référence en fonction de la phase mesurée et de la fréquence de modulation mesurée.

Ce mode de réalisation permet de mesurer précisément et en temps réel la phase et la fréquence de modulation du rayonnement optique émis par la source de rayonnement optique de manière à permettre l'obtention d'un spectre d'amplitude $R(\lambda)$ et d'un spectre de phase $\theta(\lambda)$ représentatifs du rayonnement optique.

Selon un mode de réalisation, l'ensemble collecte comprend au moins une optique de collecte dédiée à l'ensemble détection optique.

Selon un mode de réalisation, l'ensemble division de faisceau de rayonnement optique est configuré pour délivrer en sortie au moins un faisceau de rayonnement optique supplémentaire configuré pour être délivré à l'ensemble détection optique.

Ce mode de réalisation présente pour avantage le fait de ne pas nécessiter l'utilisation d'une optique de collecte dédiée pour l'ensemble détection optique.

Selon un mode de réalisation, au moins une chaîne de communication entre l'ensemble détection optique, l'ensemble synchronisation et l'ensemble modulation est, au moins en partie, réalisée à l'aide d'une technique de télécommunication choisie parmi : VLC (visible light communication), Li-Fi®, Wi-Fi®, courants porteurs en ligne (CPL),

téléphonie mobile, de préférence 5G, un protocole radiofréquence, ou un protocole propriétaire.

L'utilisation de l'une des techniques listées ci-dessus permet une communication rapide et efficace entre les éléments de l'ensemble spectromètre, on comprendra cependant que tout type de communication permettant de transmettre des informations entre les éléments de l'ensemble spectromètre peut être utilisé en variante.

Les techniques VLC (visible light communication) et Li-Fi permettent un mode de réalisation particulier dans lequel au moins une partie des informations transmises peuvent être codées de manière à pouvoir commander la source de rayonnement optique, de telle sorte que lesdites informations sont codées dans le rayonnement optique émis par la source de rayonnement optique.

Selon un mode de réalisation, l'ensemble spectromètre comprend en outre une plate-forme motorisée apte à diriger l'ensemble collecte tour à tour vers une pluralité de sources de rayonnement optique.

Ce mode de réalisation permet d'effectuer successivement des mesures en utilisant différentes sources de rayonnement optique disposées dans l'environnement. On comprendra que, de préférence, la plate-forme est asservie de manière à automatiser la visée des différentes sources de rayonnement optique.

La présente invention porte également sur une utilisation d'un ensemble spectromètre selon l'un des modes de réalisation ci-dessus, caractérisée par le fait que l'utilisation comprend les étapes suivantes : mettre en place un ensemble spectromètre de manière à ce que l'ensemble collecte soit apte à viser successivement au moins un élément d'éclairage disposé dans l'environnement de telle sorte que l'ensemble spectromètre utilise successivement chaque élément d'éclairage comme source de rayonnement optique, et utiliser l'ensemble spectromètre pour mettre en œuvre une technique de spectroscopie d'absorption optique différentielle (DOAS) pour mesurer la concentration d'au moins un élément présent dans de l'air situé entre chaque élément d'éclairage et l'ensemble collecte.

Cette utilisation permet notamment la mesure de concentrations de polluants dans l'air. Cette utilisation a recours à des éléments d'éclairage déjà disposés dans l'environnement, comme par exemple des luminaires d'éclairage public, ce qui a pour avantage de permettre des mesures sans besoin d'ajouter une source de rayonnement optique supplémentaire.

Pour cette utilisation, les mesures sont de préférence réalisées avec une distance de quelques centaines de mètres entre la source de rayonnement optique et l'ensemble collecte. De plus, comme la détection est réalisée de manière synchrone, les mesures peuvent être effectuées de jour sans interférences liées à la lumière du soleil.

Selon un mode de réalisation, l'au moins un élément d'éclairage émet au moins dans une gamme spectrale bleue et l'ensemble spectromètre est configuré pour mesurer une concentration de $NO_2$ dans l'air et un indice de turbidité de l'air.

Selon un mode de réalisation, l'ensemble spectromètre exploite une modulation temporelle du rayonnement optique émis par l'au moins un élément d'éclairage à une fréquence de modulation dominante afin de pouvoir réaliser l'utilisation en présence de lumière du jour, la fréquence de modulation dominante étant de préférence comprise entre 90 Hz et 130 Hz.

Par exemple, dans le cas d'une source de rayonnement optique alimentée sur le secteur, la fréquence de la modulation temporelle est fonction de la fréquence de la tension alternative de l'alimentation de la source de rayonnement optique. Dans ce cas, en France la fréquence de modulation sera voisine de 100 Hz, et aux États-Unis ou au Japon voisine de 120 Hz.

Selon un mode de réalisation, la source de rayonnement optique modulée est une source commandée configurée pour émettre au moins un rayonnement optique à au moins une fréquence de modulation.

L'utilisation d'une source de rayonnement optique commandée permet notamment d'effectuer des mesures à l'aide de l'ensemble spectromètre afin d'obtenir des informations sur la source de rayonnement optique en fonction des paramètres de commande.

Par ailleurs, l'utilisation d'une source de rayonnement optique commandée peut permettre l'émission d'un rayonnement optique à certaines longueurs d'onde afin d'obtenir, grâce aux mesures de l'ensemble spectromètre, des informations sur un milieu se trouvant entre la source de rayonnement optique et l'ensemble collecte. Le milieu peut par exemple être un solide, un liquide ou un gaz.

Selon un mode de réalisation, la source de rayonnement optique modulée commandée est l'une parmi un échantillon excité par un laser de pompe modulé, un échantillon excité par une source d'excitation électrique alternative, un échantillon excité par une source d'excitation thermique modulée.

Selon un mode de réalisation, l'ensemble spectromètre est configuré pour obtenir un spectre d'amplitude ($R(\lambda)$) et un spectre de phase ($\theta(\lambda)$) représentatifs d'au moins l'un parmi un rayonnement de corps noir, une émission de lumière secondaire, une modification de propriétés de transmission, une modification de propriétés de réflexion, un transfert thermique, une diffusion de charges, une diffusion optique, et une fluorescence.

L'invention a également pour objet l'utilisation d'un ensemble spectromètre synchrone selon la présente invention pour une ou plusieurs des applications suivantes :

- spectrophotométrie des sources d'éclairage et d'affichage, l'ensemble spectromètre étant connecté à une cellule de mesure d'éclairement (mesure de l'éclairement spectrique) ou à une cellule de mesure de luminance (mesure de la

luminance spectrique) ;

- mesure optique de concentration de polluants dans l'air ;
- télédétection utilisant une source de lumière artificielle, permettant de s'affranchir de la lumière parasite ;
- spectrophotométrie des sources de lumière modulée, l'ensemble spectromètre étant connecté à une sphère d'intégration, à une cellule de mesure d'éclairement ou à une cellule de mesure de luminance pour effectuer la mesure du spectre d'émission en amplitude et en phase des sources de lumière modulée ;
- spectrophotométrie des sources de lumière non modulées, la lumière émise par la source est alors modulée délibérément pour rejeter les rayonnements parasites ;
- caractérisation de l'exposition oculaire à la lumière modulée ;
- caractérisation des éclairages liés à de l'acquisition d'images ;
- analyse physico-chimique des milieux diffusants ;
- contrôle non destructif des sources de lumière ;
- analyse photothermique modulée.

La présente invention a également pour objet un procédé de spectrométrie synchrone appliquée à une source modulée de rayonnement optique à plusieurs longueurs d'onde, comprenant les étapes suivantes :

- recevoir le rayonnement optique provenant de la source,
- à partir du rayonnement optique reçu, générer au moins un faisceau de rayonnement optique source, tous les faisceaux de rayonnement optique sources étant identiques,
- à partir de l'au moins un faisceau de rayonnement optique source, générer une pluralité de premières sections temporelles de faisceau de rayonnement optique dites en phase et une pluralité de secondes sections temporelles de faisceau de rayonnement optique en quadrature de phase par rapport aux premières sections temporelles,
- mesurer au moyen d'au moins un spectromètre une quantité spectrale de chaque faisceau de rayonnement optique source $I_0(\lambda)$, $Q_0(\lambda)$,
- acquérir, au moyen de l'au moins un spectromètre, des spectres ($I_i(\lambda)$, avec $i \in \{1,..,N\}$) sur les premières sections temporelles de l'au moins un faisceau de rayonnement optique source, chaque spectre étant mesuré sur N sections temporelles de faisceau de rayonnement optique source,
- acquérir, au moyen de l'au moins un spectromètre, des spectres ($Q_i(\lambda)$, avec $i \in \{1,..,N\}$) sur les secondes sections temporelles de l'au moins un faisceau de rayonnement optique source, chaque spectre étant mesuré sur N sections temporelles de faisceau de rayonnement optique source,
- filtrer, par une unité de filtrage passe-bas, les spectres ($I_i(\lambda)$, avec $i \in \{1,..,N\}$) afin d'obtenir un spectre $I(\lambda)$, et les spectres ($Q_i(\lambda)$, avec $i \in \{1,..,N\}$) afin d'obtenir un spectre $Q(\lambda)$,
- calculer, par une unité de calcul un spectre d'amplitude $R(\lambda)$ et un spectre de phase $\theta(\lambda)$ du rayonnement optique collecté à l'aide des formules suivantes :

$$R(\lambda) = \sqrt{\left(I(\lambda) - \frac{1}{2}I_0(\lambda)\right)^2 + \left(Q(\lambda) - \frac{1}{2}Q_0(\lambda)\right)^2}$$

et

$$\Theta(\lambda) = \arctan\left(\frac{Q(\lambda) - \frac{1}{2}Q_0(\lambda)}{I(\lambda) - \frac{1}{2}I_0(\lambda)}\right)$$

L'au moins un faisceau de rayonnement optique source peut être obtenu à partir du rayonnement optique provenant de la source optique par un dispositif optique (hacheur...) ou électroniquement.

Il est possible d'utiliser un ou deux faisceaux de rayonnement optique sources et un ou deux spectromètres.

La présente invention a également pour objet un procédé de spectrométrie synchrone appliquée à une source modulée de rayonnement optique à plusieurs longueurs d'onde, comprenant les étapes suivantes :

- recevoir le rayonnement optique provenant de la source,
- à partir du rayonnement optique reçu, générer un premier faisceau de rayonnement optique source, un deuxième faisceau de rayonnement optique source, un troisième faisceau de rayonnement optique source et un quatrième

faisceau de rayonnement optique source, identiques,

- à partir des premier, deuxième, troisième et quatrième faisceaux de rayonnement optique sources, générer une pluralité de premières sections temporelles de faisceau de rayonnement optique dites en phase, une pluralité de deuxièmes sections temporelles de faisceau de rayonnement optique en quadrature de phase et en avance de phase par rapport aux premières sections temporelles, une pluralité de troisièmes sections temporelles de faisceau de rayonnement optique en quadrature de phase et en avance de phase par rapport aux deuxièmes sections temporelles et une pluralité de quatrièmes sections temporelles de faisceau de rayonnement optique en quadrature de phase et en avance de phase par rapport aux troisièmes sections temporelles,
- acquérir, au moyen d'un premier spectromètre, des spectres ($I_{1i}(\lambda)$, avec $i \in \{1, .., N\}$) sur les premières sections temporelles, chaque spectre étant mesuré sur N sections temporelles de faisceau de rayonnement optique source,
- acquérir, au moyen d'un deuxième spectromètre, des spectres ($Q_{1i}(\lambda)$, avec $i \in \{1, .., N\}$) sur les deuxièmes sections temporelles, chaque spectre étant mesuré sur N sections temporelles de faisceau de rayonnement optique source,
- acquérir, au moyen d'un troisième spectromètre, des spectres ($I_{2i}(\lambda)$, avec $i \in \{1, .., N\}$) sur les troisièmes sections temporelles, chaque spectre étant mesuré sur N sections temporelles de faisceau de rayonnement optique source,
- acquérir, au moyen d'un quatrième spectromètre, des spectres ($Q_{2i}(\lambda)$, avec $i \in \{1, .., N\}$) sur les quatrièmes sections temporelles, chaque spectre étant mesuré sur N sections temporelles de faisceau de rayonnement optique source,
- filtrer, par une unité de filtrage passe-bas, les spectres ($I_{1i}(\lambda)$, avec $i \in \{1, .., N\}$) afin d'obtenir un spectre ($I_1(\lambda)$), les spectres ($Q_{1i}(\lambda)$, avec $i \in \{1, .., N\}$) afin d'obtenir un spectre ($Q_1(\lambda)$), les spectres ($I_{2i}(\lambda)$, avec $i \in \{1, .., N\}$) afin d'obtenir un spectre ($I_2(\lambda)$), et les spectres ($Q_{2i}(\lambda)$, avec $i \in \{1, .., N\}$) afin d'obtenir un spectre ($Q_2(\lambda)$),
- calculer, par une unité de calcul, un spectre l'aide d'amplitude $R(\lambda)$ et un spectre de phase

$$R(\lambda) = \sqrt{(I_1(\lambda) - I_2(\lambda))^2 + (Q_1(\lambda) - Q_2(\lambda))^2}$$

et

$$\Theta(\lambda) = \arctan\left(\frac{Q_1(\lambda) - Q_2(\lambda)}{I_1(\lambda) - I_2(\lambda)}\right)$$

Des modes de réalisation de la présente invention et des utilisations selon la présente invention vont maintenant être décrits à titre d'exemple non limitatif, avec référence aux dessins annexés.

Sur ces dessins :

[Fig.1] est une représentation schématique d'un ensemble spectromètre selon un premier mode de réalisation de la présente invention.

[Fig.2] est une représentation schématique d'un ensemble spectromètre selon un deuxième mode de réalisation de la présente invention.

[Fig.3] est une représentation schématique d'un ensemble spectromètre selon un troisième mode de réalisation de la présente invention.

[Fig.4] est une représentation schématique d'un ensemble spectromètre selon un quatrième mode de réalisation de la présente invention.

[Fig.5] est une représentation schématique d'un ensemble spectromètre selon un cinquième mode de réalisation de la présente invention.

Sur les figures, les traits en pointillés représentent des faisceaux de rayonnement optique et les traits pleins représentent des liaisons de communication.

Si l'on se réfère aux Figures 1 à 5, on peut voir que l'ensemble spectromètre 1 comprend un ensemble mesure 1a appliqué à une source modulée de rayonnement optique à plusieurs longueurs d'onde 1b entre lesquels se trouve un milieu 2. Sur les Figures 1 à 5 le milieu 2 est schématiquement représenté sur la forme d'un gaz, on comprendra cependant que l'invention ne se limite pas à un gaz et que le milieu 2 peut être tout milieu à travers lequel un rayonnement optique peut se propager, comme par exemple un solide ou un liquide.

Si l'on se réfère à la [Fig.1], on peut voir que l'on y a représenté un ensemble spectromètre 1 selon un premier mode de réalisation de la présente invention. Selon ce premier mode de réalisation l'ensemble spectromètre 1 comprend deux spectromètres 6, de préférence identiques. L'ensemble spectromètre 1 comprend en outre un ensemble collecte 3,

un ensemble synchronisation 4, un ensemble modulation 5, une unité de calcul 7 et un ensemble détection optique 8.

Comme représenté en [Fig.1], selon le premier mode de réalisation, l'ensemble collecte 3 comprend une optique de collecte 3a, configurée pour collecter un faisceau de rayonnement optique à partir d'un rayonnement optique émis par la source de rayonnement optique 1b après que celui-ci se soit propagé dans le milieu 2, et un ensemble division de faisceau de rayonnement optique 3c, configuré pour diviser le faisceau de rayonnement optique collecté en deux faisceaux de rayonnement optique sources identiques destinés à être délivrés à l'ensemble modulation 5 et en un faisceau de rayonnement optique supplémentaire, identique aux faisceaux de rayonnement optique sources, destiné à être délivré à l'ensemble détection optique 8.

L'ensemble détection optique 8 est configuré pour mesurer de manière précise et en temps réel la phase et la fréquence de modulation du rayonnement optique, et pour transférer ces informations à l'ensemble synchronisation 4.

L'ensemble synchronisation 4 est configuré pour générer un signal de référence sur la base de la phase et de la fréquence de modulation mesurées par l'ensemble détection optique 8.

Le signal de référence comprend notamment une fréquence $f_m$ de commande utilisée pour commander l'ensemble modulation 5.

L'ensemble synchronisation 4 est relié à l'ensemble modulation 5 pour transférer le signal de référence à l'ensemble modulation 5.

Selon le premier mode de réalisation, l'ensemble modulation 5 est configuré pour moduler un premier faisceau de rayonnement optique source et un second faisceau de rayonnement optique source en fonction du signal de référence. Puis les faisceaux modulés sont délivrés aux spectromètres 6.

Comme représenté en [Fig.1], selon le premier mode de réalisation, l'ensemble modulation 5 comprend un unique modulateur optique 5a, le modulateur optique 5a étant de préférence un modulateur mécanique de type « chopper ».

L'ensemble modulation 5 est configuré de manière à contrôler une acquisition par chaque spectromètre 6 d'une pluralité de spectres.

Les spectres comprennent des informations pour toutes les longueurs d'onde du rayonnement optique, et chaque spectre est mesuré sur N sections temporelles de faisceau de rayonnement optique source, avec N un entier supérieur ou égal à un.

Chaque section temporelle a une durée correspondant à une période $\frac{1}{f_m}$ et est $\frac{1}{f_m}$, avec $f_m$ la fréquence utilisée pour commander l'ensemble modulation 5 obtenue à partir du signal de référence.

Un premier spectromètre 6 est configuré pour acquérir des spectres $I_i(\lambda)$, avec $i \in \{1, .., N\}$, sur des premières sections temporelles, du premier faisceau de rayonnement optique source, dites en phase par rapport au rayonnement optique collecté par l'ensemble collecte 3.

Un second spectromètre 6 est configuré pour acquérir des spectres $Q_i(\lambda)$, avec $i \in \{1, .., N\}$, sur des secondes sections temporelles, du second faisceau de rayonnement optique source, en quadrature de phase par rapport aux premières sections temporelles.

Par ailleurs, le premier spectromètre 6 est configuré pour mesurer, indépendamment de l'ensemble modulation 5, c'est-à-dire lorsque le faisceau entrant dans le premier spectromètre 6 est le premier faisceau de rayonnement optique intact, une quantité spectrale du premier faisceau de rayonnement optique source $I_0(\lambda)$.

Le second spectromètre 6 est lui configuré pour mesurer, indépendamment de l'ensemble modulation 5, c'est-à-dire lorsque le faisceau entrant dans le second spectromètre 6 est le second faisceau de rayonnement optique intact, une quantité spectrale du second faisceau de rayonnement optique source $Q_0(\lambda)$.

Comme représenté sur la [Fig.1], les spectromètres 6 sont reliés à l'unité de calcul 7 afin de pouvoir traiter les spectres acquis par les spectromètres 6.

L'ensemble spectromètre 1 comprend en outre une unité de filtrage passe-bas. L'unité de filtrage passe-bas est configurée pour être appliquée aux spectres $I_i(\lambda)$, avec $i \in \{1, .., N\}$, afin d'obtenir un spectre $I(\lambda)$, et pour être appliquée aux spectres $Q_i$ $(\lambda)$, avec $i \in \{1, .., N\}$, afin d'obtenir un spectre $Q(\lambda)$.

On comprendra que de manière préférée le nombre N de sections temporelles utilisées pour mesurer les spectres $I(\lambda)$ et $Q(\lambda)$ est identique, mais que des nombres de sections temporelles différents pour $I(\lambda)$ et $Q(\lambda)$ peuvent être utilisés selon des variantes.

Selon l'invention, l'unité de filtrage passe-bas peut être mise en œuvre de manière physique ou par calcul.

Lorsque l'unité de filtrage passe-bas est physique, le filtrage passe bas est réalisé par le temps d'intégration du spectromètre, c'est-à-dire que le filtrage passe-bas est obtenu par l'accumulation de charges photoélectriques dans les éléments photosensibles du détecteur de chaque spectromètre pendant un temps d'acquisition. Les éléments photosensibles restent exposés pendant plusieurs sections temporelles puis une acquisition est réalisée.

Lorsque l'unité de filtrage passe-bas fait appel à des calculs, l'unité de filtrage passe-bas est intégrée à l'unité de calcul 7, et le filtrage passe-bas est réalisé par un filtrage numérique des spectres. Un exemple de filtre numérique passe-bas peut consister à réaliser une moyenne sur les N spectres i.

Puis, l'unité de calcul est configurée pour calculer un spectre d'amplitude R(λ) et un spectre de phase θ(λ) du rayonnement optique collecté par l'ensemble collecte 3 à l'aide des formules suivantes :

$$R(\lambda) = \sqrt{\left(I(\lambda) - \tfrac{1}{2}I_0(\lambda)\right)^2 + \left(Q(\lambda) - \tfrac{1}{2}Q_0(\lambda)\right)^2}$$

et

$$\Theta(\lambda) = \arctan\left(\frac{Q(\lambda) - \tfrac{1}{2}Q_0(\lambda)}{I(\lambda) - \tfrac{1}{2}I_0(\lambda)}\right)$$

Si l'on se réfère à la [Fig.2], on peut voir que l'on y a représenté un ensemble spectromètre 1 selon un deuxième mode de réalisation de la présente invention. Les éléments identiques au premier mode de réalisation portent le même chiffre de référence, les éléments différents portent le même chiffre de référence avec un caractère « ' ». Selon ce deuxième mode de réalisation l'ensemble spectromètre 1' comprend également deux spectromètres 6, de préférence identiques. Le deuxième mode de réalisation est identique au premier mode de réalisation à l'exception des points décrits ci-dessous.

Comme représenté en [Fig.2], selon le deuxième mode de réalisation, l'ensemble collecte 3' de l'ensemble spectromètre 1' comprend une optique de collecte 3b dédiée à l'ensemble détection optique 8. Cette optique de collecte 3b dédiée à l'ensemble détection optique 8 est configurée pour collecter un faisceau de rayonnement optique à partir du rayonnement optique et pour délivrer ce faisceau de rayonnement optique à l'ensemble détection optique 8, afin de réaliser les mêmes mesures que pour le premier mode de réalisation, c'est-à-dire des mesures de la phase et de la fréquence de modulation du rayonnement optique. L'ensemble division de faisceau de rayonnement optique 3c est configuré pour diviser le faisceau de rayonnement optique collecté en un premier faisceau de rayonnement optique source et en un second faisceau de rayonnement optique source identiques destinés à être délivrés à l'ensemble modulation 5'. Contrairement au premier mode de réalisation illustré en [Fig.1], l'ensemble division de faisceau de rayonnement optique 3c ne fournit pas de faisceau de rayonnement optique supplémentaire destiné à être délivré à l'ensemble détection optique 8.

Selon le deuxième mode de réalisation, l'ensemble modulation 5' comprend deux modulateurs optique 5a. Un premier modulateur optique 5a configuré pour moduler le premier faisceau de rayonnement optique source et un second modulateur optique 5a configuré pour moduler le second faisceau de rayonnement optique source.

Selon le deuxième mode de réalisation, l'ensemble synchronisation 4' est configuré pour générer deux signaux de référence qui sont délivrés aux deux modulateurs optiques 5a afin de commander la modulation sur la base de la fréquence commande.

Dans le deuxième mode de réalisation, l'acquisition des spectres se fait de la même manière que dans le premier mode de réalisation.

Si l'on se réfère à la [Fig.3], on peut voir que l'on y a représenté un ensemble spectromètre 10 selon un troisième mode de réalisation de la présente invention. Les éléments identiques au premier mode de réalisation portent le même chiffre de référence, les éléments différents portent le même chiffre de référence multiplié par 10. Selon ce troisième mode de réalisation l'ensemble spectromètre 10 comprend un seul spectromètre 6. Comme pour les deux premiers modes de réalisation, selon le troisième mode de réalisation, l'ensemble spectromètre 10 comprend en outre un ensemble collecte 3, un ensemble synchronisation 4, un ensemble modulation 50, une unité de calcul 7 et un ensemble détection optique 8.

Comme représenté en [Fig.3], selon le troisième mode de réalisation, l'ensemble collecte 3 comprend une optique de collecte 3a, configurée pour collecter un faisceau de rayonnement optique à partir d'un rayonnement optique émis par la source de rayonnement optique 1b après que celui-ci se soit propagé dans un milieu 2, et un ensemble division de faisceau de rayonnement optique 3c.

Selon le troisième mode de réalisation, l'ensemble division de faisceau de rayonnement optique 3c est configuré pour diviser le rayonnement optique collecté en un faisceau de rayonnement optique source destiné à être délivré à l'ensemble modulation 50 et en un faisceau de rayonnement optique supplémentaire identique destiné à être délivré à l'ensemble détection optique 8.

Comme pour les deux premiers modes de réalisation, selon le troisième mode de réalisation, l'ensemble détection optique 8 est configuré pour mesurer de manière précise et en temps réel la phase et la fréquence de modulation du rayonnement optique, et pour transférer ces informations à l'ensemble synchronisation 4.

Selon le troisième mode de réalisation, l'ensemble synchronisation 4 est configuré pour générer un signal de

référence sur la base de la phase et de la fréquence de modulation mesurées par l'ensemble détection optique 8.

Le signal de référence comprend notamment une fréquence commande utilisée pour commander l'ensemble modulation 50.

L'ensemble synchronisation 4 est relié à l'ensemble modulation 50 pour transférer le signal de référence à l'ensemble modulation 50.

Comme représenté en [Fig.3], selon le troisième mode de réalisation, l'ensemble modulation 50 est intégré au spectromètre 6. Le signal de référence est alors utilisé comme un signal de déclenchement, ou « trigger », et l'ensemble modulation 50 est configuré de manière à contrôler une acquisition par le spectromètre 6 d'une pluralité de spectres.

Les spectres comprennent des informations pour toutes les longueurs d'onde du rayonnement optique, et chaque spectre est mesuré sur N sections temporelles de faisceau de rayonnement optique source, avec N un entier supérieur ou égal à un.

Chaque section temporelle a une durée correspondant à une période $\frac{1}{f_m}$ et est espacée d'une section temporelle de même type d'une période $\frac{1}{f_m}$, avec $f_m$ la fréquence utilisée pour commander l'ensemble modulation 50 obtenue à partir du signal de référence.

Le spectromètre 6 est configuré pour acquérir des spectres $I_i(\lambda)$, avec $i \in \{1, .., N\}$, sur des premières sections temporelles, du faisceau de rayonnement optique source, dites en phase par rapport au rayonnement optique collecté par l'ensemble collecte 3, puis pour acquérir des spectres $Q_i(\lambda)$, avec $i \in \{1, .., N\}$, sur des secondes sections temporelles, du premier faisceau de rayonnement optique source, en quadrature de phase par rapport aux premières sections temporelles.

Selon le troisième mode de réalisation, le spectromètre 6 est configuré pour réaliser successivement au moins une fois les acquisitions des spectres $I_i(\lambda)$, avec $i \in \{1, .., N\}$, sur les premières sections temporelles et des spectres $Q_i(\lambda)$, avec $i \in \{1, .., N\}$, sur les secondes sections temporelles. On comprendra que les acquisitions sont répétées plusieurs fois en fonction de la précision souhaitée.

Par ailleurs, le spectromètre 6 est configuré pour mesurer, indépendamment de l'ensemble modulation 50, c'est-à-dire sur le faisceau de rayonnement source intact, une quantité spectrale du faisceau de rayonnement optique source $I_0(\lambda) = Q_0(\lambda)$.

Comme représenté sur la [Fig.3], le spectromètre 6 est relié à l'unité de calcul 7 afin de pouvoir traiter les spectres acquis par le spectromètre 6.

Comme pour les deux premiers modes de réalisation, selon le troisième mode de réalisation, l'ensemble spectromètre 10 comprend en outre une unité de filtrage passe-bas. L'unité de filtrage passe-bas est configurée pour être appliquée aux spectres $I_i(\lambda)$, avec $i \in \{1, .., N\}$, afin d'obtenir un spectre $I(\lambda)$, et pour être appliquée aux spectres $Q_i(\lambda)$, avec $i \in \{1, .., N\}$, afin d'obtenir un spectre $Q(\lambda)$.

On comprendra que, comme pour les deux premiers modes de réalisation, selon le troisième mode de réalisation, de manière préférée le nombre N de sections temporelles utilisées pour mesurer les spectres $I(\lambda)$ et $Q(\lambda)$ est identique, mais que des nombres de sections temporelles différents pour $I(\lambda)$ et $Q(\lambda)$ peuvent être utilisés selon des variantes.

Selon le troisième mode de réalisation, l'unité de filtrage passe-bas est mise en œuvre par calcul. L'unité de filtrage passe-bas est intégrée à l'unité de calcul 7, et le filtrage passe-bas est réalisé par un filtrage numérique des spectres. Un exemple de filtre numérique passe-bas peut consister à réaliser une moyenne sur les N spectres i.

Puis, l'unité de calcul est configurée pour calculer un spectre d'amplitude $R(\lambda)$ et un spectre de phase $\theta(\lambda)$ du rayonnement optique collecté par l'ensemble collecte 3 à l'aide des formules suivantes :

$$R(\lambda) = \sqrt{\left(I(\lambda) - \frac{1}{2}I_0(\lambda)\right)^2 + \left(Q(\lambda) - \frac{1}{2}Q_0(\lambda)\right)^2}$$

et

$$\Theta(\lambda) = \arctan\left(\frac{Q(\lambda) - \frac{1}{2}Q_0(\lambda)}{I(\lambda) - \frac{1}{2}I_0(\lambda)}\right)$$

Le troisième mode de réalisation est une adaptation des deux premiers modes de réalisation, qui permet d'utiliser un seul spectromètre, tout en bénéficiant des mêmes avantages que les modes de réalisation à deux spectromètres. Ce troisième mode de réalisation est cependant plus sensible à la stabilité du rayonnement optique collecté en raison du fait que les acquisitions effectuées pour les spectres I(λ) et Q(λ) ne peuvent pas être réalisées simultanément mais doivent être réalisées de manière successive.

Si l'on se réfère à la [Fig.4], on peut voir que l'on y a représenté un ensemble spectromètre 100 selon un quatrième mode de réalisation de la présente invention. Les éléments identiques au premier mode de réalisation portent le même chiffre de référence, les éléments différents portent le même chiffre de référence multiplié par 100. Selon ce quatrième mode de réalisation l'ensemble spectromètre 100 comprend quatre spectromètres 6. Selon le quatrième mode de réalisation, l'ensemble spectromètre 100 comprend en outre un ensemble collecte 300, un ensemble synchronisation 400, un ensemble modulation 500, et une unité de calcul 7.

Comme représenté en [Fig.4], selon le quatrième mode de réalisation, l'ensemble collecte 300 comprend quatre optiques de collecte 3a, configurées pour chacune collecter un faisceau de rayonnement optique à partir d'un rayonnement optique émis par la source de rayonnement optique 1b après que celui-ci se soit propagé dans un milieu 2. Contrairement aux trois premiers modes de réalisation, le quatrième mode de réalisation ne comprend pas d'ensemble division de faisceau de rayonnement optique 3c.

Selon le quatrième mode de réalisation, chaque optique de collecte 3a est configurée pour délivrer un faisceau de rayonnement optique source à l'ensemble modulation 500, tous les faisceaux de rayonnement optique sources étant identiques comme pour les trois premiers modes de réalisation.

Selon le quatrième mode de réalisation, l'ensemble synchronisation 400 est configuré pour générer un signal de référence et comprend un générateur de signal qui génère quatre signaux de référence. Les signaux de référence sont, de préférence, générés en fonction de l'alimentation électrique de la source de rayonnement optique 1b. En variante, les signaux de référence pourraient également être générés par d'autres moyens, par exemple sur la base d'une horloge externe.

L'ensemble synchronisation 400 selon le quatrième mode de réalisation permet d'obtenir la phase et la fréquence de modulation du rayonnement optique émis par la source de rayonnement optique 1b en connaissant la forme d'onde du courant alternatif d'alimentation de la source de rayonnement optique 1b, ce qui permet de s'affranchir de mesures sur le rayonnement optique pour générer les signaux de référence.

Les signaux de référence comprennent notamment une fréquence commande utilisée pour commander l'ensemble modulation 500.

L'ensemble synchronisation 400 est relié à l'ensemble modulation 500 pour transférer les signaux de référence à l'ensemble modulation 500.

Selon le quatrième mode de réalisation, l'ensemble modulation 500 est configuré pour moduler un premier faisceau de rayonnement optique source, un deuxième faisceau de rayonnement optique source, un troisième faisceau de rayonnement optique source et un quatrième faisceau de rayonnement optique source, en fonction des signaux de référence. Puis les faisceaux modulés sont délivrés aux spectromètres 6.

Comme représenté en [Fig.4], selon le quatrième mode de réalisation, l'ensemble modulation 500 comprend quatre modulateurs optiques 5a, les modulateurs optiques 5a étant de préférence des modulateurs électro-optiques ou à des modulateurs acousto-optiques.

L'ensemble modulation 500 est configuré de manière à contrôler une acquisition par chaque spectromètre 6 d'une pluralité de spectres.

Les spectres comprennent des informations pour toutes les longueurs d'onde du rayonnement optique, et chaque spectre est mesuré sur N sections temporelles de faisceau de rayonnement optique source, avec N un entier supérieur ou égal à un.

Chaque section temporelle a une durée correspondant à une période $\frac{1}{f_m}$ et est espacée d'une section temporelle de même type d'une période $\frac{1}{f_m}$, avec $f_m$ la fréquence utilisée pour commander l'ensemble modulation 500 obtenue à partir des signaux de référence.

Un premier spectromètre 6 est configuré pour acquérir des spectres $I_{1i}(\lambda)$, avec $i \in \{1, .., N\}$, sur des premières sections temporelles, du premier faisceau de rayonnement optique source, dites en phase par rapport au rayonnement optique collecté par l'ensemble collecte 3.

Un deuxième spectromètre 6 est configuré pour acquérir des spectres $Q_{1i}(\lambda)$, avec $i \in \{1, .., N\}$, sur des deuxièmes sections temporelles, du deuxième faisceau de rayonnement optique source, en quadrature de phase et en avance de phase par rapport aux premières sections temporelles.

Un troisième spectromètre 6 est configuré pour acquérir des spectres $I_{2i}(\lambda)$, avec $i \in \{1, .., N\}$, sur des troisièmes sections temporelles, du troisième faisceau de rayonnement optique source, en quadrature de phase et en avance de phase par rapport aux deuxièmes sections temporelles.

Un quatrième spectromètre 6 est configuré pour acquérir des spectres $Q_{2i}(\lambda)$, avec $i \in \{1, .., N\}$, sur des quatrièmes sections temporelles, du quatrième faisceau de rayonnement optique source, en quadrature de phase et en avance de phase par rapport aux troisièmes sections temporelles.

Comme représenté sur la [Fig.4], les spectromètres 6 sont reliés à l'unité de calcul 7 afin de pouvoir traiter les spectres acquis par les spectromètres 6.

Comme pour les trois premiers modes de réalisation, selon le quatrième mode de réalisation, l'ensemble spectromètre 100 comprend en outre une unité de filtrage passe-bas. L'unité de filtrage passe-bas est configurée pour être appliquée aux spectres $I_{1i}(\lambda)$, avec $i \in \{1, .., N\}$, afin d'obtenir un spectre $I_1(\lambda)$, pour être appliquée aux spectres $Q_{1i}(k)$, avec $i \in \{1, .., N\}$, afin d'obtenir un spectre $Q_1(\lambda)$, pour être appliquée aux spectres $I_{2i}(\lambda)$, avec $i \in \{1, .., N\}$, afin d'obtenir un spectre $I_2(\lambda)$, et pour être appliquée aux spectres $Q_{2i}(\lambda)$, avec $i \in \{1, .., N\}$, afin d'obtenir un spectre $Q_2(\lambda)$.

On comprendra que de manière préférée le nombre N de sections temporelles utilisées pour mesurer les spectres $I_1(\lambda)$, $Q_1(\lambda)$, $I_2(\lambda)$ et $Q_2(\lambda)$ est identique, mais que des nombres de sections temporelles différents pour $I_1(\lambda)$, $Q_1(\lambda)$, $I_2(\lambda)$ et $Q_2(\lambda)$ peuvent être utilisés selon des variantes.

Comme pour les premier et deuxième modes de réalisation, selon le quatrième mode de réalisation, l'unité de filtrage passe-bas peut être mise en œuvre de manière physique ou par calcul.

Lorsque l'unité de filtrage passe-bas est physique, le filtrage passe bas est réalisé par le temps d'intégration du spectromètre, c'est-à-dire que le filtrage passe-bas est obtenu par l'accumulation de charges photoélectriques dans les éléments photosensibles du détecteur de chaque spectromètre pendant un temps d'acquisition. Les éléments photosensibles restent exposés pendant plusieurs sections temporelles puis une acquisition est réalisée.

Lorsque l'unité de filtrage passe-bas fait appel à des calculs, l'unité de filtrage passe-bas est intégrée à l'unité de calcul 7, et le filtrage passe-bas est réalisé par un filtrage numérique des spectres. Un exemple de filtre numérique passe-bas peut consister à réaliser une moyenne sur les N spectres i.

Puis, l'unité de calcul est configurée pour calculer un spectre d'amplitude $R(\lambda)$ et un spectre de phase $\theta(\lambda)$ du rayonnement optique collecté par l'ensemble collecte 3 à l'aide des formules suivantes :

$$R(\lambda) = \sqrt{(I_1(\lambda) - I_2(\lambda))^2 + (Q_1(\lambda) - Q_2(\lambda))^2},$$

et

$$\Theta(\lambda) = \arctan\left(\frac{Q_1(\lambda) - Q_2(\lambda)}{I_1(\lambda) - I_2(\lambda)}\right)$$

Le quatrième mode de réalisation est une adaptation des premier, deuxième et troisième modes de réalisation, qui permet d'utiliser un ensemble modulation 500 dit « imparfait » qui ne module pas à cent pour cent un faisceau de rayonnement optique source, tout en bénéficiant des mêmes avantages que les modes de réalisations précédents. Un ensemble modulation 500 dit « imparfait » peut par exemple faire appel à des modulateurs électro-optiques ou à des modulateurs acousto-optiques utilisés pour les fibres optiques télécom. Ces modulateurs optiques 5a présentent les avantages d'être plus compacts et plus robustes que des modulateurs mécaniques, tels que les « choppers ».

En contrepartie le quatrième mode de réalisation nécessite l'utilisation de quatre spectromètres 6, de préférence identiques.

Si l'on se réfère maintenant à la [Fig.5], on peut voir que l'on y a représenté un ensemble spectromètre 200 selon un cinquième mode de réalisation. Les éléments identiques au premier mode de réalisation portent le même chiffre de référence. L'ensemble spectromètre 200 selon le cinquième mode de réalisation est identique à l'un quelconque des modes de réalisation précédents à l'exception des points détaillés ci-dessous.

Comme illustré sur la [Fig.5], selon le cinquième mode de réalisation, l'ensemble spectromètre 200 comprend un ensemble détection optique 8 déporté situé à proximité immédiate de la source de rayonnement optique 1b. Un faisceau de rayonnement optique, collecté à partir du rayonnement optique émis par la source de rayonnement optique 1b à l'aide d'une optique de collecte 3b dédiée, est délivré à l'ensemble détection optique 8 de manière à pourvoir mesurer la phase et la fréquence de modulation du rayonnement optique. L'ensemble détection optique 8 est relié à un ensemble communication sans fil 11 configuré pour transmettre les informations mesurées par l'ensemble détection optique 8 à l'ensemble synchronisation 4.

On comprendra qu'en variante les informations peuvent également être transmises de manière filaire.

Comme illustré sur la [Fig.5], selon le cinquième mode de réalisation, l'ensemble spectromètre 200 comprend également une plate-forme motorisée 9 apte à diriger l'ensemble collecte 3 tour à tour vers une pluralité de sources de rayonnement optique 1b, ce qui permet d'effectuer successivement des mesures en utilisant différentes sources de rayonnement optique 1b disposées dans l'environnement.

On comprendra que de préférence la plate-forme 9 est asservie de manière à automatiser la visée des différentes sources de rayonnement optique 1b.

Le cinquième mode de réalisation est particulièrement adapté à une utilisation de l'ensemble spectromètre 200 comprenant les étapes suivantes : mettre en place l'ensemble spectromètre 200 de manière à ce que l'ensemble collecte 3 soit apte à viser successivement plusieurs éléments d'éclairage, de préférence des luminaires d'éclairage public, disposés dans l'environnement de telle sorte que l'ensemble spectromètre 1 utilise successivement chaque élément d'éclairage comme source de rayonnement optique 1b, et utiliser l'ensemble spectromètre 200 pour mettre en œuvre une technique de spectroscopie d'absorption optique différentielle (DOAS) pour mesurer la concentration de plusieurs éléments, de préférence des polluants, présents dans un milieu 2, de préférence de l'air, situé entre chaque élément d'éclairage et l'ensemble collecte 3.

Cette utilisation à recours à des éléments d'éclairage déjà disposés dans l'environnement, comme par exemple les luminaires d'éclairage public, ce qui a pour avantage de permettre des mesures sans besoin d'ajouter une source de rayonnement optique 1b supplémentaire.

Pour cette utilisation, les mesures sont de préférence réalisées avec une distance de quelques centaines de mètres entre la source de rayonnement optique 1b et l'ensemble collecte 3. De plus, comme la détection est réalisée de manière synchrone, les mesures peuvent être effectuées de jour sans interférences liées à la lumière du soleil.

De préférence, chaque élément d'éclairage émet dans une gamme spectrale bleue et l'ensemble spectromètre 200 est configuré pour mesurer une concentration de $NO_2$ dans l'air et un indice de turbidité de l'air.

De préférence encore, l'ensemble spectromètre 200 exploite une modulation temporelle du rayonnement optique émis par les éléments d'éclairage à une fréquence de modulation dominante afin de pouvoir réaliser l'utilisation en présence de lumière du jour. La fréquence de modulation dominante est de préférence comprise entre 90 Hz et 130 Hz.

Par exemple, dans le cas d'une source de rayonnement optique 1b alimentée sur le secteur, la modulation temporelle est fonction de la fréquence de la tension alternative de l'alimentation de la source de rayonnement optique. Dans ce cas, en France la fréquence de modulation sera voisine de 100 Hz, et aux États-Unis ou au Japon voisine de 120 Hz.

On comprendra que d'autres utilisations sont possibles pour un ensemble spectromètre selon l'invention 1, 1', 10, 100, 200, comme par exemple une utilisation pour laquelle la source de rayonnement optique modulée 1b est une source commandée configurée pour émettre au moins un rayonnement optique à au moins une fréquence de modulation.

L'utilisation d'une source de rayonnement optique 1b commandée permet notamment d'effectuer des mesures à l'aide de l'ensemble spectromètre 1, 1', 10, 100, 200 afin d'obtenir des informations sur la source de rayonnement optique 1b en fonction des paramètres de commande. Par ailleurs, l'utilisation d'une source de rayonnement optique 1b commandée peut permettre l'émission d'un rayonnement optique à certaines longueurs d'onde afin d'obtenir, grâce aux mesures de l'ensemble spectromètre 1, 1', 10, 100, 200, des informations sur un milieu 2 se trouvant entre la source de rayonnement optique 1b et l'ensemble collecte 3. Le milieu pouvant par exemple être un solide, un liquide ou un gaz.

A titre d'exemples non limitatifs, la source de rayonnement optique modulée 1b commandée peut être un échantillon excité par un laser de pompe modulé, un échantillon excité par une source d'excitation électrique alternative, ou un échantillon excité par une source d'excitation thermique modulée.

A titre d'exemples non limitatifs, l'ensemble spectromètre 1, 1', 10, 100, 200 peut être configuré pour obtenir un spectre d'amplitude $R(\lambda)$ et un spectre de phase $\theta(\lambda)$ représentatifs d'un rayonnement de corps noir, d'une émission de lumière secondaire, d'une modification de propriétés de transmission, d'une modification de propriétés de réflexion, d'un transfert thermique, d'une diffusion de charges, d'une diffusion optique, ou d'une fluorescence.

On va décrire ci-dessous quelques utilisations possibles pour un ensemble spectromètre 1, 1', 10, 100, 200 selon la présente invention.

Les utilisations d'un ensemble spectromètre selon l'invention peuvent être classées en deux types, à savoir des utilisations in-situ et des utilisations en laboratoire.

Pour les utilisations in-situ, l'ensemble collecte comprend, de préférence, un télescope, un objectif photographique, ou un autre système de visée optique analogue.

Pour les utilisations en laboratoire, l'ensemble collecte comprend, de préférence, une sphère d'intégration, une cellule de mesure d'éclairement ou une cellule de mesure de luminance.

Si l'on s'intéresse tout d'abord aux utilisations in-situ, on peut par exemple citer la spectrophotométrie de sources d'éclairage ou d'affichage. L'utilisation la plus évidente d'un ensemble spectromètre selon l'invention est de permettre de mesurer le spectre d'une source de lumière modulée, par exemple une lampe ou un luminaire d'éclairage intérieur ou extérieur, en présence de lumière du jour ou de lumière parasite. Dans ce cas, l'ensemble collecte comprend de

préférence une cellule de mesure d'éclairement (mesure de l'éclairement spectrique) ou une cellule de mesure de luminance (mesure de la luminance spectrique). Cela permet de mesurer en plein jour les installations d'éclairage et d'affichage, par exemple des enseignes ou des publicités lumineuses, intérieures et extérieures. Le contrôle de la performance et de la conformité des installations est ainsi grandement facilité et coûte bien moins cher en évitant le travail de nuit.

On peut également citer les mesures optiques de concentrations de polluants de l'air extérieur, déjà évoquées plus haut. Une utilisation de ce type permet par exemple la mesure de la concentration de $NO_2$ et de l'indice de turbidité par une technique dite DOAS long trajet (en anglais « long-path DOAS ») utilisant, de préférence, les luminaires d'éclairage public, de préférence à DEL. La gamme spectrale « bleue » de la lumière émise par les DEL est mise à profit car elle correspond à des signatures d'absorption moléculaire du dioxyde d'azote ($NO_2$). On exploite la modulation temporelle de la lumière émise par les luminaires à la fréquence dominante de 100 Hz, ou 120 Hz aux États-Unis ou au Japon. Un ensemble spectromètre selon l'invention permet de mesurer en plein jour le spectre d'un faisceau lumineux transmis par l'atmosphère à partir d'un luminaire d'éclairage public en fonctionnement à grande distance, de préférence à une distance comprise entre 100 m et 5 km. Pour une utilisation de ce type, l'ensemble collecte comprend de préférence un télescope, de préférence encore un télescope de type Newtonien ou de type Cassegrain, disponible commercialement pour l'observation astronomique. Les faisceaux de rayonnement optique sont, de préférence, guidés par fibre optique.

De préférence encore pour une utilisation de ce type, l'ensemble spectromètre comprend un ensemble détection optique, de préférence situé sur le luminaire, configuré pour mesurer in-situ le spectre émis par le luminaire DEL et transmettre le spectre d'émission à l'ensemble synchronisation, de préférence, grâce à une liaison sans fil de type optique, par exemple par modulation VLC ou LiFi® superposée à la lumière émise par le luminaire, grâce à une liaison par courants porteurs en ligne (CPL), ou grâce à une liaison par radiofréquence, par exemple par 5G, Lora®, Sigfox®, ou analogue.

On peut encore citer des utilisations pour d'autres techniques de télédétection, ou « remote sensing » en anglais, utilisant une source de lumière artificielle. Par exemple, dans le cas des technique LIDAR, la modulation de la source laser permet d'utiliser un ensemble spectromètre selon l'invention pour mesurer rapidement le spectre de la lumière réfléchie et en présence de lumière parasite. Dans le cas des techniques de télédétection utilisant l'imagerie multispectrale ou hyperspectrale, un ensemble spectromètre selon la présente invention peut être utilisé pour améliorer le temps d'acquisition des imageurs hyperspectraux et améliorer l'immunité à la lumière ambiante.

Si l'on s'intéresse maintenant aux utilisations en laboratoire, on peut par exemple citer la spectrophotométrie des sources de lumière modulée. De préférence, l'ensemble collecte comprend alors une sphère d'intégration, une cellule de mesure d'éclairement, ou une cellule de mesure de luminance pour effectuer une mesure en laboratoire du spectre d'émission en amplitude et en phase (spectre « complexe ») des sources de lumière modulée. Cette utilisation constitue une caractérisation supplémentaire, porteuse d'informations physiques sur la dynamique de production de la lumière qui n'étaient pas accessible par la spectrométrie classique, sauf en ayant recours à des spectromètres très haut de gamme, basés sur des détecteurs CMOS rapides qui sont complexes, moins sensibles et plus coûteux que les spectromètres compacts standards qui peuvent être utilisés dans un ensemble spectromètre selon la présente invention.

On peut aussi citer une utilisation en alternative à la spectrométrie optique à détection synchrone électronique. Une autre utilisation d'un ensemble spectromètre selon l'invention est d'améliorer la sensibilité de la mesure de n'importe quelle source de rayonnement optique non-modulée en modulant délibérément la lumière émise de manière à pourvoir rejeter les rayonnements parasites ou environnants qui ne présentent pas de composantes à la fréquence de modulation choisie. Cette utilisation est une alternative nouvelle à la spectrométrie optique à balayage et à détection synchrone, par exemple utilisée en analyse chimique, par exemple par le biais de la spectrométrie analytique. Cependant, dans ce cas la détection synchrone est classiquement effectuée de manière électronique et non pas optique. Les avantages d'un ensemble spectromètre selon l'invention sont une réduction de la complexité du traitement des signaux, une réduction de coût et une réduction très importante du temps d'acquisition d'un spectre. Le facteur de réduction est à peu près égal au nombre de voies spectrales, ce qui correspond typiquement à un facteur 400 dans le domaine des longueurs d'onde visibles.

On peut citer une utilisation pour une caractérisation de l'exposition oculaire à la lumière modulée. L'exposition humaine à la lumière modulée émise par les sources d'éclairage est à l'origine d'effets visuels indésirables, comme par exemple un papillotement, des effets stroboscopiques, ou des effets de réseau fantôme, et d'effets sanitaires, comme les migraines et la fatigue visuelle par exemple. Un ensemble spectromètre selon l'invention permet de caractériser l'exposition humaine à la lumière modulée de manière plus complète que les appareils de mesure actuellement disponibles, tels que les flickermètres, qui mesurent uniquement la forme d'onde temporelle des fluctuations lumineuses, et non pas leur spectre. Les utilisations pour une mesure du spectre complexe de la lumière modulée reçue dans le plan de l'œil sont par exemple les études de la perception visuelle des effets chromatiques de la modulation temporelle de la lumière, ou « chromatic flicker » en anglais, et les études du mécanisme d'apparition des couleurs subjectives de Fechner-Benham.

On peut également citer une utilisation pour une caractérisation des éclairages liés à de l'acquisition d'images. Le spectre complexe de l'éclairage peut être utilisé pour expliquer les artéfacts indésirables de type « moiré » produits par

les capteurs d'images en présence de lumière modulée et de motifs périodiques colorés. Des utilisations sont ainsi possibles dans la vision industrielle, ou « machine vision » en anglais, et le cinéma par exemple.

On peut citer une utilisation pour une analyse physico-chimique de milieux diffusants. Un ensemble spectromètre selon l'invention peut être utilisé pour mesurer le spectre de transmission, en amplitude et en phase de milieux diffusants, par exemple liquides ou aérosols, par exemple des fumées, de manière à étudier leurs propriétés optiques. En utilisant des fréquences de modulation élevées, par exemple de l'ordre d'une centaine de MHz jusqu'à plusieurs GHz, le spectre de phase donne accès à des informations sur les temps de propagation dans ces milieux selon la longueur d'onde.

On peut aussi citer une utilisation pour un contrôle non destructif de sources de lumière utilisées en éclairage. Dans ce cas, il est nécessaire de procéder à une acquisition de spectres complexes, spectre d'amplitude et spectre de phase, à plusieurs fréquences de modulation pour déterminer les paramètres caractéristiques de la dynamique de la production de la lumière et pouvoir détecter des dérives de ces paramètres, comme par exemple les capacités, les résistances et inductances de jonction d'une DEL, et les constantes de temps des luminophores.

Enfin on peut citer une utilisation pour une analyse photothermique modulée. Les méthodes d'analyse photothermique modulée sont utilisées en laboratoire pour étudier les propriétés optiques, élastiques et thermiques de matériaux absorbants, comme par exemple des métaux, des semi-conducteurs, des matériaux composites, ou des tissus vivants. Ces techniques sont par exemple la radiométrie photothermique ou la microscopie photothermique. Ces techniques utilisent un laser excitateur modulé, ou « laser de pompe », pour créer une diffusion thermique alternative dans le matériau à analyser. Cette diffusion thermique alternative est détectée par des signatures optiques qui peuvent être passives, par exemple liées à l'émission thermique de corps noir, ou bien actives, par exemple une déflection ou une diffusion d'un second faisceau laser sonde. Les méthodes photothermiques modulées utilisent toute une détection synchrone électronique pour mesurer une signature optique qui comporte une composante modulée à la fréquence de modulation du laser excitateur. Un ensemble spectromètre selon l'invention permet d'améliorer la détection des signatures spectrales des excitations photothermiques en évitant le recours à un amplificateur synchrone électronique et en fournissant simultanément des spectres d'amplitude et de phase synchrones à l'excitation laser. Une signature spectrale est par exemple une composante modulée de l'émission thermique de corps noir du matériau étudié, ou une composante modulée du spectre d'un faisceau sonde dispersé par le milieu étudié.

Selon l'invention, en fonction des mesures souhaitées, la fréquence $f_m$ utilisée pour commander l'ensemble modulation peut correspondre à la fréquence de modulation du rayonnement optique émis par la source de rayonnement optique ou à une harmonique de la fréquence de modulation du rayonnement optique, comme par exemple la fréquence double ou la fréquence triple de la fréquence de modulation du rayonnement optique. Dans le cas où l'ensemble modulation est configuré pour utiliser une fréquence harmonique de la fréquence de modulation du rayonnement optique, émis par la source de rayonnement optique, comme fréquence de commande $f_m$, le spectre d'amplitude $R(\lambda)$ et le spectre de phase $\theta(\lambda)$ obtenus caractérisent la non-linéarité du milieu se trouvant entre la source de rayonnement optique et l'ensemble collecte. Le milieu peut par exemple être un solide, un liquide ou un gaz. L'utilisation d'une fréquence harmonique peut être utile pour une caractérisation de cristaux optiques non-linéaires, de semi-conducteurs ou de milieux biologiques. Dans le domaine de l'éclairage, ce mode de réalisation permet, par exemple, d'étudier un comportement non linéaire de luminophores de DEL en fonctionnement. Cette fonctionnalité est très utile en contrôle non destructif.

Selon l'invention, les optiques de collectes peuvent être tout élément ou dispositif permettant de collecter un faisceau de rayonnement optique à partir d'un rayonnement optique émis par une source de rayonnement optique.

Les optiques de collectes peuvent par exemple être l'une parmi un télescope, une sphère d'intégration, un objectif photographique, une lentille convergente, une cellule de mesure d'éclairement, ou une cellule de mesure de luminance, en fonction de la nature de la source de rayonnement optique, de la distance entre l'ensemble collecte et la source de rayonnement optique, et de l'application souhaitée.

Selon l'invention, l'unité de calcul se présente sous la forme d'un micro-ordinateur mais peut en variante être tout type de dispositif permettant de réaliser des calculs numériques, comme par exemple un processeur, un microprocesseur, un microcontrôleur, un processeur de signaux numériques (DSP), un composant à application spécifique (ASIC), une matrice prédiffusée programmable (FPGA), associé à de la mémoire morte ou de la mémoire vive.

Selon l'invention, l'ensemble détection optique se présente sous la forme d'une photodiode mais peut en variante comprendre tout capteur apte à mesurer la phase et la fréquence de modulation d'un rayonnement optique, comme par exemple un phototransistor, un microbolomètre, un capteur d'image de type CCD ou CMOS, un capteur pyroélectrique, une cellule photovoltaïque.

Selon l'invention, l'ensemble division de faisceau de rayonnement optique est un ensemble configuré pour recevoir en entrée un faisceau de rayonnement optique et pour délivrer en sortie autant de faisceaux de rayonnement optique identiques au faisceau de rayonnement optique entrant que nécessaire. Selon l'invention, l'ensemble division de faisceau de rayonnement optique est de préférence un faisceau de fibres optiques à une entrée et deux, trois ou quatre fibres de sortie, faisceau de fibres dite « bifurquées », une lame séparatrice, ou un prisme séparateur de faisceau, ou « beamsplitter ».

Selon l'invention, de manière préférée, lorsque l'ensemble modulation comprend des modulateurs optiques,

l'ensemble modulation comprend une boucle à phase asservie PLL configurée pour commander les modulateurs optiques.

Selon l'invention, de manière préférée, lorsque l'ensemble spectromètre comprend un ensemble détection optique, l'ensemble synchronisation comprend un circuit électronique de conversion analogique-numérique configuré pour recevoir un signal électrique analogique provenant de l'ensemble détection optique et pour générer le signal de référence, de préférence sous la forme d'un signal électrique logique de type TTL. Le circuit électronique de conversion analogique-numérique peut, par exemple, consister en un convertisseur TTL comprenant, par exemple, un étage de découplage d'une composante continue du signal, un étage de polarisation électrique fixe par un pont diviseur de tension et un étage de comparateur à hystérésis à seuils symétriques, ou bascule de Schmidt, autour de la polarisation fixe utilisant un amplificateur opérationnel, ou comparateur, intégré.

Selon l'invention, lorsque le signal de référence est obtenu à partir de l'alimentation électrique de la source de rayonnement optique, le signal de référence électrique est de préférence converti en signal logique TTL, par exemple par une bascule de Schmidt, et un bloc électronique « doubleur de fréquence » est également associé pour détecter un signal optique qui est modulé à une fréquence double d'une fréquence d'alimentation électrique. Par exemple en France la fréquence d'alimentation électrique est généralement de 50 Hz et la fréquence de modulation de 50 x 2 = 100 Hz.

On comprendra que de manière préférée tous les spectromètres d'un ensemble spectromètre sont identiques, cependant en variante les spectromètres peuvent être différents. Dans le cas où les spectromètres sont différents, ils ont de préférence une même sensibilité spectrale, et une même résolution en longueurs d'onde.

On comprendra aussi que, de préférence, chaque spectromètre est étalonné avant les mesures, de préférence, en réalisant un étalonnage du rendement quantique et un étalonnage du courant d'obscurité.

On comprendra que selon l'invention les faisceaux de rayonnement optique peuvent être conduits par tous moyens, comme par exemple dans l'air ou dans une fibre optique.

On comprendra également que les techniques de communication permettant les transferts d'informations entre les différents éléments de l'ensemble spectromètre ne sont pas limitées par la présente invention et que tout type de communication permettant de transmettre des informations entre les éléments de l'ensemble spectromètre peut être utilisé, comme par exemple des communications par VLC (visible light communication), Li-Fi®, Wi-Fi®, courants porteurs en ligne (CPL), téléphonie mobile, de préférence 5G, un protocole radiofréquence, ou un protocole propriétaire.

Les techniques VLC (visible light communication) et Li-Fi® permettent un mode de réalisation particulier dans lequel au moins une partie des informations transmises peut être codée de manière à pouvoir commander la source de rayonnement optique, de telle sorte que lesdites informations sont codées dans le rayonnement optique émis par la source de rayonnement optique.

Enfin, on comprendra que les cinq modes de réalisation décrits ci-dessus sont donnés à titre d'exemples non limitatifs et que d'autres combinaisons de source modulée de rayonnement optique, de milieu, d'ensemble collecte, d'ensemble synchronisation, d'ensemble modulation, de spectromètres, d'unité de calcul et d'ensemble détection optique, tels que décrits ci-dessus sont possibles pour mettre en œuvre l'ensemble spectromètre.

Par exemple, une variante du quatrième mode de réalisation pourrait utiliser un ensemble détection optique, comprenant ou non une optique dédiée, en remplacement ou en complément du générateur de signal de l'ensemble synchronisation. Une autre variante du quatrième mode de réalisation pourrait utiliser un ensemble collecte avec une seul optique de collecte et un ensemble division de faisceau de rayonnement optique configuré pour fournir les quatre faisceaux de rayonnement optique sources identiques.

Par exemple encore, une variante de troisième mode de réalisation pourrait mesurer quatre groupes de spectres en quadrature et pourrait utiliser les formules de calcul présentées pour le quatrième mode de réalisation.

Une variante du premier, du deuxième ou du quatrième mode de réalisation pourrait utiliser un ensemble modulation intégré aux spectromètres, du type présenté pour le troisième mode de réalisation.

Une variante du deuxième ou du quatrième mode de réalisation pourrait utiliser un ensemble modulation comprenant un seul modulateur optique.

Une variante du premier mode de réalisation pourrait utiliser un ensemble modulation comprenant deux modulateurs optiques.

L'homme du métier comprendra que d'autres configurations ou utilisations sont également possibles sans s'écarter du cadre de la présente invention.

## Revendications

1. Ensemble spectromètre synchrone à phases multiples (1, 1') configuré pour être appliqué à une source modulée de rayonnement optique à plusieurs longueurs d'onde (1b), ledit ensemble spectromètre (1, 1') comprenant un ensemble collecte (3) configuré pour collecter un rayonnement optique à plusieurs longueurs d'onde émis par la source modulée (1b),

**caractérisé par le fait que** :

• l'ensemble collecte (3, 3') comprend au moins une optique de collecte (3a) et est configuré pour délivrer en sortie au moins deux faisceaux de rayonnement optique sources identiques ;
• l'ensemble spectromètre (1, 1') comprend :

• un ensemble synchronisation (4) configuré pour générer au moins un signal de référence sur la base de la phase et de la fréquence de modulation du rayonnement optique émis par la source de rayonnement optique (1b),
• deux spectromètres (6),
• un ensemble modulation (5, 5') configuré pour contrôler, sur la base de l'au moins un signal de référence, une acquisition par chaque spectromètre (6) d'une pluralité de spectres,

les spectres comprenant des informations pour au moins une plage de longueurs d'onde des longueurs d'onde du rayonnement optique, chaque spectre étant mesuré sur N sections temporelles de faisceau de rayonnement optique source, N étant un entier supérieur ou égal à un, chaque section temporelle ayant une durée correspondant à une période $\frac{1}{f_m}$ et étant espacée d'une section temporelle de même type d'une période $\frac{1}{f_m}$, $f_m$ étant une fréquence utilisée pour commander l'ensemble modulation obtenue à partir de l'au moins un signal de référence ;
• un premier spectromètre (6) est configuré pour acquérir des spectres ($I_i(\lambda)$, avec $i \in \{1, .., N\}$) sur des premières sections temporelles, d'un premier faisceau de rayonnement optique source, dites en phase par rapport au rayonnement optique collecté par l'ensemble collecte (3, 3') ;
• un second spectromètre (6) est configuré pour acquérir des spectres ($Q_i(\lambda)$, avec $i \in \{1, .., N\}$) sur des secondes sections temporelles, d'un deuxième faisceau de rayonnement optique source, en quadrature de phase par rapport aux premières sections temporelles ;
• le premier spectromètre est configuré pour mesurer, sans recours à l'ensemble modulation (5, 5'), une quantité spectrale du premier faisceau de rayonnement optique source ($I_0(\lambda)$) ;
• le second spectromètre est configuré pour mesurer, sans recours à l'ensemble modulation (5, 5'), une quantité spectrale du deuxième faisceau de rayonnement optique source ($Q_0(\lambda)$) ;
• l'ensemble spectromètre (1, 1') comprend une unité de filtrage passe-bas configurée pour être appliquée aux spectres ($I_i(\lambda)$, avec $i \in \{1, .., N\}$) afin d'obtenir un spectre ($I(\lambda)$), et pour être appliquée aux spectres ($Q_i(\lambda)$, avec $i \in \{1, .., N\}$) afin d'obtenir un spectre ($Q(\lambda)$) ; et
• l'ensemble spectromètre (1, 1') comprend une unité de calcul (7) configurée pour calculer un spectre d'amplitude ($R(\lambda)$) et un spectre de phase ($\theta(\lambda)$) du rayonnement optique collecté par l'ensemble collecte (3, 3') à l'aide des formules suivantes :

$$R(\lambda) = \sqrt{\left(I(\lambda) - \frac{1}{2}I_0(\lambda)\right)^2 + \left(Q(\lambda) - \frac{1}{2}Q_0(\lambda)\right)^2}$$

et

$$\Theta(\lambda) = \arctan\left(\frac{Q(\lambda) - \frac{1}{2}Q_0(\lambda)}{I(\lambda) - \frac{1}{2}I_0(\lambda)}\right)$$

**2.** Ensemble spectromètre synchrone à phases multiples (10) configuré pour être appliqué à une source modulée de rayonnement optique à plusieurs longueurs d'onde (1b), ledit ensemble spectromètre (10) comprenant un ensemble collecte (3) configuré pour collecter un rayonnement optique à plusieurs longueurs d'onde émis par la source modulée (1b),
**caractérisé par le fait que** :

• l'ensemble collecte (3) comprend au moins une optique de collecte (3a) et est configuré pour délivrer en sortie au moins un faisceau de rayonnement optique source ;
• l'ensemble spectromètre (10) comprend :

- un ensemble synchronisation (4) configuré pour générer un signal de référence sur la base de la phase et de la fréquence de modulation du rayonnement optique émis par la source de rayonnement optique (1b),
- un seul spectromètre (6),
- un ensemble modulation (50) configuré pour contrôler, sur la base du signal de référence, une acquisition par le spectromètre (6) d'une pluralité de spectres,

les spectres comprenant des informations pour au moins une plage de longueurs d'onde des longueurs d'onde du rayonnement optique, chaque spectre étant mesuré sur N sections temporelles de faisceau de rayonnement optique source, N étant un entier supérieur ou égal à un, chaque section temporelle ayant une durée correspondant à une période $\frac{1}{f_m}$ et étant espacée d'une section temporelle de même type d'une période $\frac{1}{f_m}$, avec $f_m$ une fréquence utilisée pour commander l'ensemble modulation (50) obtenue à partir du signal de référence ;

- le spectromètre (6) est configuré pour acquérir des spectres ($I_i$ (λ), avec $i \in \{1, .., N\}$) sur des premières sections temporelles, d'un premier faisceau de rayonnement optique source, dites en phase par rapport au rayonnement optique collecté par l'ensemble collecte, puis des spectres ($Q_i$(λ), avec $i \in \{1, .., N\}$) sur des secondes sections temporelles, du premier faisceau de rayonnement optique source, en quadrature de phase par rapport aux premières sections temporelles ;
- le spectromètre (6) est configuré pour réaliser successivement au moins une fois les acquisitions des spectres ($I_i$ (λ), avec $i \in \{1, .., N\}$) sur les premières sections temporelles et des spectres ($Q_i$(λ), avec $i \in \{1, .., N\}$) sur les secondes sections temporelles ;
- le spectromètre (6) est configuré pour mesurer, sans recours à l'ensemble modulation, une quantité spectrale du premier faisceau de rayonnement optique source ($I_0(\lambda) = Q_0(\lambda)$) ;
- l'ensemble spectromètre (10) comprend une unité de filtrage passe-bas configurée pour être appliquée aux spectres ($I_i$(λ), avec $i \in \{1, .., N\}$) afin d'obtenir un spectre (I(λ)), et pour être appliquée aux spectres ($Q_i$(λ), avec $i \in \{1, .., N\}$) afin d'obtenir un spectre (Q(λ)) ; et
- l'ensemble spectromètre (10) comprend une unité de calcul (7) configurée pour calculer un spectre d'amplitude (R(λ)) et un spectre de phase (θ(λ)) du rayonnement optique collecté par l'ensemble collecte (3) à l'aide des formules suivantes :

$$R(\lambda) = \sqrt{\left(I(\lambda) - \tfrac{1}{2}I_0(\lambda)\right)^2 + \left(Q(\lambda) - \tfrac{1}{2}Q_0(\lambda)\right)^2}$$

et

$$\Theta(\lambda) = \arctan\left(\frac{Q(\lambda) - \frac{1}{2}Q_0(\lambda)}{I(\lambda) - \frac{1}{2}I_0(\lambda)}\right)$$

**3.** Ensemble spectromètre synchrone à phases multiples (100) configuré pour être appliqué à une source modulée de rayonnement optique à plusieurs longueurs d'onde (1b), ledit ensemble spectromètre (100) comprenant un ensemble collecte (300) configuré pour collecter un rayonnement optique à plusieurs longueurs d'onde émis par la source modulée (1b),
**caractérisé par le fait que** :

- l'ensemble collecte (300) comprend au moins une optique de collecte (3a) et est configuré pour délivrer en sortie au moins quatre faisceaux de rayonnement optique sources identiques ;
- l'ensemble spectromètre (100) comprend :
  - un ensemble synchronisation (400) configuré pour générer au moins un signal de référence sur la base de la phase et de la fréquence de modulation du rayonnement optique émis par la source de rayonnement optique,
  - quatre spectromètres (6),
  - un ensemble modulation (500) configuré pour contrôler, sur la base de l'au moins un signal de référence, une acquisition par chaque spectromètre (6) d'une pluralité de spectres,

les spectres comprenant des informations pour au moins une plage de longueurs d'onde des longueurs d'onde du rayonnement optique, chaque spectre étant mesuré sur N sections temporelles de faisceau de rayonnement optique source, N étant un entier supérieur ou égal à un, chaque section temporelle ayant une durée correspondant à une période $\frac{1}{f_m}$ et étant espacée d'une section temporelle de même type d'une période $\frac{1}{f_m}$, avec $f_m$ une fréquence utilisée pour commander l'ensemble modulation (500) obtenue à partir de l'au moins un signal de référence ;

• un premier spectromètre (6) est configuré pour acquérir des spectres ($I_{1i}(\lambda)$, avec $i \in \{1, .., N\}$) sur des premières sections temporelles, d'un premier faisceau de rayonnement optique source, dites en phase par rapport au rayonnement optique collecté par l'ensemble collecte (300) ;

• un deuxième spectromètre (6) est configuré pour acquérir des spectres ($Q_{1i}(\lambda)$, avec $i \in \{1, .., N\}$) sur des deuxièmes sections temporelles, d'un deuxième faisceau de rayonnement optique source, en quadrature de phase et en avance de phase par rapport aux premières sections temporelles ;

• un troisième spectromètre (6) est configuré pour acquérir des spectres ($I_{2i}(\lambda)$, avec $i \in \{1, .., N\}$) sur des troisièmes sections temporelles, d'un troisième faisceau de rayonnement optique source, en quadrature de phase et en avance de phase par rapport aux deuxièmes sections temporelles ;

• un quatrième spectromètre (6) est configuré pour acquérir des spectres ($Q_{2i}(\lambda)$, avec $i \in \{1, .., N\}$) sur des quatrièmes sections temporelles, d'un quatrième faisceau de rayonnement optique source, en quadrature de phase et en avance de phase par rapport aux troisièmes sections temporelles ;

• l'ensemble spectromètre (100) comprend une unité de filtrage passe-bas configurée pour être appliquée aux spectres ($I_{1i}(\lambda)$, avec $i \in \{1, .., N\}$) afin d'obtenir un spectre ($I_1(\lambda)$), pour être appliquée aux spectres ($Q_{1i}(\lambda)$, avec $i \in \{1, .., N\}$) afin d'obtenir un spectre ($Q_1(\lambda)$), pour être appliquée aux spectres ($I_{2i}(\lambda)$, avec $i \in \{1, .., N\}$) afin d'obtenir un spectre ($I_2(\lambda)$), et pour être appliquée aux spectres ($Q_{2i}(\lambda)$, avec $i \in \{1, .., N\}$) afin d'obtenir un spectre ($Q_2(\lambda)$) ; et

• l'ensemble spectromètre (100) comprend une unité de calcul (7) configurée pour calculer un spectre d'amplitude ($R(\lambda)$) et un spectre de phase ($\theta(\lambda)$) du rayonnement optique collecté par l'ensemble collecte (300) à l'aide des formules suivantes :

$$R(\lambda) = \sqrt{(I_1(\lambda) - I_2(\lambda))^2 + (Q_1(\lambda) - Q_2(\lambda))^2}$$

et

$$\Theta(\lambda) = \arctan\left(\frac{Q_1(\lambda) - Q_2(\lambda)}{I_1(\lambda) - I_2(\lambda)}\right)$$

4. Ensemble spectromètre (1 ; 1' ; 10) selon l'une quelconque des revendications 1 à 3, **caractérisé par le fait que** l'ensemble collecte (3 ; 3') comprend en outre un ensemble division de faisceau de rayonnement optique (3c).

5. Ensemble spectromètre (100) selon l'une quelconque des revendication 1 à 3, **caractérisé par le fait que** l'ensemble collecte (300) comprend au moins autant d'optiques de collecte (3a) configurées pour collecter le rayonnement optique émis par la source de rayonnement optique (1b) qu'il y a de spectromètres (6).

6. Ensemble spectromètre (1 ; 1' ; 10 ; 100) selon l'une quelconque des revendications 1 à 5, **caractérisé par le fait qu'**au moins l'une des optiques de collecte (3a, 3b) est choisie parmi un télescope, une sphère d'intégration, un objectif photographique, une lentille convergente, une cellule de mesure d'éclairement et une cellule de mesure de luminance.

7. Ensemble spectromètre (1 ; 1' ; 100) selon l'une quelconque des revendications 1 à 6, **caractérisé par le fait que** l'ensemble modulation (5 ; 5' ; 500) comprend au moins un modulateur optique (5a), l'au moins un modulateur optique (5a) étant de préférence choisi parmi un modulateur mécanique, un modulateur électro-optique et un modulateur acousto-optique.

8. Ensemble spectromètre (10) selon l'une quelconque des revendications 1 à 6, **caractérisé par le fait que** l'ensemble modulation (50) est intégré dans chaque spectromètre (6) et est configuré pour contrôler l'acquisition de chaque

spectromètre (6) à l'aide d'un signal de déclenchement.

**9.** Ensemble spectromètre (1 ; 1' ; 10 ; 100) selon l'une quelconque des revendications 1 à 8, **caractérisé par le fait que** l'ensemble modulation (5 ; 5' ; 50 ; 500) est configuré pour utiliser la fréquence de modulation du rayonnement optique émis par la source de rayonnement optique comme fréquence de commande $f_m$.

**10.** Ensemble spectromètre (1 ; 1' ; 10 ; 100) selon l'une quelconque des revendications 1 à 8, **caractérisé par le fait que** l'ensemble modulation (5 ; 5' ; 50 ; 500) est configuré pour utiliser une fréquence harmonique de la fréquence de modulation du rayonnement optique émis par la source de rayonnement optique (1b) comme fréquence de commande $f_m$, de telle sorte que le spectre d'amplitude ($R(\lambda)$) et le spectre de phase ($\theta(\lambda)$) caractérisent la non-linéarité d'un milieu (2) se trouvant entre la source de rayonnement optique et l'ensemble collecte (3).

**11.** Ensemble spectromètre (1 ; 1' ; 10 ; 100) selon l'une quelconque des revendications 1 à 10, **caractérisé par le fait que** l'ensemble synchronisation (4 ; 4' : 400) comprend un générateur de signal générant l'au moins un signal de référence en fonction de l'alimentation électrique de la source de rayonnement optique (1b).

**12.** Ensemble spectromètre (1 ; 1' ; 10) selon l'une quelconque des revendications 1 à 10, **caractérisé par le fait que** l'ensemble spectromètre (1 ; 1' ; 10) comprend en outre un ensemble détection optique (8) configuré pour mesurer en temps réel la fréquence de modulation et la phase du rayonnement optique émis par la source de rayonnement optique (1b), et l'ensemble synchronisation (4 ; 4') est relié à l'ensemble détection optique (8) de façon à générer l'au moins un signal de référence en fonction de la phase mesurée et de la fréquence de modulation mesurée.

**13.** Ensemble spectromètre (1') selon la revendication 12, **caractérisé par le fait que** l'ensemble collecte (3') comprend au moins une optique de collecte (3b) dédiée à l'ensemble détection optique.

**14.** Ensemble spectromètre (1) selon la revendication 12 lorsqu'elle dépend de la revendication 4, **caractérisé par le fait que** l'ensemble division de faisceau de rayonnement optique (3c) est configuré pour délivrer en sortie au moins un faisceau de rayonnement optique supplémentaire configuré pour être délivré à l'ensemble détection optique (8).

**15.** Ensemble spectromètre (1 ; 1' ; 10) selon l'une quelconque des revendications 12 à 14, **caractérisé par le fait qu'**au moins une chaîne de communication entre l'ensemble détection optique (8), l'ensemble synchronisation (4 ; 4') et l'ensemble modulation (5 ; 5' ; 50) est, au moins en partie, réalisée à l'aide d'une technique de télécommunication choisie parmi : VLC (visible light communication), Li-Fi, Wi-Fi, courants porteurs en ligne (CPL), téléphonie mobile, de préférence 5G, un protocole radiofréquence, ou un protocole propriétaire.

**16.** Ensemble spectromètre (200) selon l'une quelconque des revendications 1 à 15, **caractérisé par le fait qu'**il comprend en outre une plate-forme motorisée (9) apte à diriger l'ensemble collecte (3) tour à tour vers une pluralité de sources de rayonnement optique (1b).

**17.** Utilisation d'un ensemble spectromètre (1 ; 1' ; 10 ; 100) selon l'une quelconque des revendications 1 à 16, **caractérisée par le fait que** l'utilisation comprend les étapes suivantes :

- mettre en place un ensemble spectromètre (1 ; 1' ; 10 ; 100) de manière à ce que l'ensemble collecte (3 ; 3' ; 300) soit apte à viser successivement au moins un élément d'éclairage disposé dans l'environnement de telle sorte que l'ensemble spectromètre (1 ; 1' ; 10 ; 100) utilise successivement chaque élément d'éclairage comme source de rayonnement optique (1b), chaque élément d'éclairage étant une source modulée de rayonnement optique à plusieurs longueurs d'onde (1b), et
- utiliser l'ensemble spectromètre (1 ; 1' ; 10 ; 100) pour mettre en œuvre une technique de spectroscopie d'absorption optique différentielle pour mesurer la concentration d'au moins un élément présent dans de l'air situé entre chaque élément d'éclairage et l'ensemble collecte (3 ; 3' ; 300).

**18.** Utilisation selon la revendication 17, **caractérisée par le fait que** l'au moins un élément d'éclairage émet au moins dans une gamme spectrale bleue et l'ensemble spectromètre (1 ; 1' ; 10 ; 100) est configuré pour mesurer une concentration de $NO_2$ dans l'air et un indice de turbidité de l'air.

**19.** Utilisation selon la revendication 17 ou la revendication 18, **caractérisée par le fait que** l'ensemble spectromètre (1 ; 1' ; 10 ; 100) exploite une modulation temporelle du rayonnement optique émis par l'au moins un élément d'éclairage à une fréquence de modulation dominante afin de pouvoir réaliser l'utilisation en présence de lumière du jour, la

fréquence de modulation dominante étant de préférence comprise entre 90 Hz et 130 Hz.

**20.** Procédé de spectrométrie synchrone appliquée à une source modulée de rayonnement optique à plusieurs longueurs d'onde, **caractérisé par le fait qu'**il comprend les étapes suivantes :

- recevoir le rayonnement optique provenant de la source,
- à partir du rayonnement optique reçu, générer au moins un faisceau de rayonnement optique source, tous les faisceaux de rayonnement optique sources étant identiques,
- à partir de l'au moins un faisceau de rayonnement optique source, générer une pluralité de premières sections temporelles de faisceau de rayonnement optique dites en phase et une pluralité de secondes sections temporelles de faisceau de rayonnement optique en quadrature de phase par rapport aux premières sections temporelles,
- mesurer au moyen d'au moins un spectromètre une quantité spectrale de chaque faisceau de rayonnement optique source $I_0(\lambda)$, $Q_0(\lambda)$,
- acquérir, au moyen de l'au moins un spectromètre, des spectres ($I_i(\lambda)$, avec $i\in\{1,..,N\}$) sur les premières sections temporelles de l'au moins un faisceau de rayonnement optique source, chaque spectre étant mesuré sur N sections temporelles de faisceau de rayonnement optique source,
- acquérir, au moyen de l'au moins un spectromètre, des spectres ($Q_i(\lambda)$, avec $i\in\{1,..,N\}$) sur les secondes sections temporelles de l'au moins un faisceau de rayonnement optique source, chaque spectre étant mesuré sur N sections temporelles de faisceau de rayonnement optique source,
- filtrer, par une unité de filtrage passe-bas, les spectres ($I_i(\lambda)$, avec $i\in\{1,..,N\}$) afin d'obtenir un spectre $I(\lambda)$, et les spectres ($Q_i(\lambda)$, avec $i\in\{1,..,N\}$) afin d'obtenir un spectre $Q(\lambda)$,
- calculer, par une unité de calcul un spectre d'amplitude $R(\lambda)$ et un spectre de phase $\theta(\lambda)$ du rayonnement optique collecté à l'aide des formules suivantes :

$$R(\lambda) = \sqrt{\left(I(\lambda) - \frac{1}{2}I_0(\lambda)\right)^2 + \left(Q(\lambda) - \frac{1}{2}Q_0(\lambda)\right)^2}$$

et

$$\Theta(\lambda) = \arctan\left(\frac{Q(\lambda) - \frac{1}{2}Q_0(\lambda)}{I(\lambda) - \frac{1}{2}I_0(\lambda)}\right)$$

**21.** Procédé de spectrométrie synchrone appliquée à une source modulée de rayonnement optique à plusieurs longueurs d'onde, pour un spectromètre synchrone à phases multiples (100) selon la revendication 3, **caractérisé par le fait qu'**il comprend les étapes suivantes :

- recevoir, par l'ensemble collecte (300) le rayonnement optique provenant de la source,
- à partir du rayonnement optique reçu, générer un premier faisceau de rayonnement optique source, un deuxième faisceau de rayonnement optique source, un troisième faisceau de rayonnement optique source et un quatrième faisceau de rayonnement optique source, identiques,
- à partir des premier, deuxième, troisième et quatrième faisceaux de rayonnement optique sources, générer une pluralité de premières sections temporelles de faisceau de rayonnement optique dites en phase, une pluralité de deuxièmes sections temporelles de faisceau de rayonnement optique en quadrature de phase et en avance de phase par rapport aux premières sections temporelles, une pluralité de troisièmes sections temporelles de faisceau de rayonnement optique en quadrature de phase et en avance de phase par rapport aux deuxièmes sections temporelles et une pluralité de quatrièmes sections temporelles de faisceau de rayonnement optique en quadrature de phase et en avance de phase par rapport aux troisièmes sections temporelles,
- acquérir, au moyen du premier spectromètre, des spectres ($I_{1i}(\lambda)$, avec $i \in \{1, .., N\}$) sur les premières sections temporelles, chaque spectre étant mesuré sur N sections temporelles de faisceau de rayonnement optique source,
- acquérir, au moyen du deuxième spectromètre, des spectres ($Q_{1i}(\lambda)$, avec $i \in \{1, .., N\}$) sur les deuxièmes sections temporelles, chaque spectre étant mesuré sur N sections temporelles de faisceau de rayonnement optique source,
- acquérir, au moyen du troisième spectromètre, des spectres ($I_{2i}(\lambda)$, avec $i \in \{1, .., N\}$) sur les troisièmes sections

temporelles, chaque spectre étant mesuré sur N sections temporelles de faisceau de rayonnement optique source,
- acquérir, au moyen du quatrième spectromètre, des spectres ($Q_{2i}(\lambda)$, avec $i \in \{1, .., N\}$) sur les quatrièmes sections temporelles, chaque spectre étant mesuré sur N sections temporelles de faisceau de rayonnement optique source,
- filtrer, par l'unité de filtrage passe-bas, les spectres ($I_{1i}(\lambda)$, avec $i \in \{1, .., N\}$) afin d'obtenir un spectre ($I_1(\lambda)$), les spectres ($Q_{1i}(\lambda)$, avec $i \in \{1, .., N\}$) afin d'obtenir un spectre ($Q_1(\lambda)$), les spectres ($I_{2i}$ ($\lambda$), avec $i \in \{1, ... N\}$) afin d'obtenir un spectre ($I_2(\lambda)$), et les spectres ($Q_{2i}(\lambda)$, avec $i \in \{1, .., N\}$) afin d'obtenir un spectre ($Q_2$ ($\lambda$)),
- calculer, par l'unité de calcul, un spectre d'amplitude R($\lambda$) et un spectre de phase $\theta(\lambda)$ du rayonnement optique collecté à l'aide des formules suivantes :

$$R(\lambda) = \sqrt{(I_1(\lambda) - I_2(\lambda))^2 + (Q_1(\lambda) - Q_2(\lambda))^2}$$

et

$$\Theta(\lambda) = \arctan\left(\frac{Q_1(\lambda) - Q_2(\lambda)}{I_1(\lambda) - I_2(\lambda)}\right)$$

**Patentansprüche**

**1.** Mehrphasige lock-in Spektrometeranordnung (1, 1'), die konfiguriert ist, um an eine modulierte Quelle optischer Strahlung mit mehreren Wellenlängen (1b) angelegt zu werden, die Spektrometeranordnung (1, 1') umfassend eine Sammelanordnung (3), die konfiguriert ist, um eine optische Strahlung mit mehreren Wellenlängen zu sammeln, die von der modulierten Quelle (1b) emittiert wird,
**dadurch gekennzeichnet, dass**

• die Sammelanordnung (3, 3') mindestens eine Sammeloptik (3a) umfasst und konfiguriert ist, um mindestens zwei identische optische Quellstrahlungsbündel auszugeben;
• die Spektrometeranordnung (1, 1') Folgendes umfasst:

• eine Lock-in-anordnung (4), die konfiguriert ist, um mindestens ein Referenzsignal basierend auf der Phase und der Modulationsfrequenz der optischen Strahlung zu erzeugen, die von der Quelle optischer Strahlung (1b) emittiert wird,
• zwei Spektrometer (6),
• eine Modulationsanordnung (5, 5'), die konfiguriert ist, um basierend auf dem mindestens einen Referenzsignal eine Erfassung einer Vielzahl von Spektren durch jedes Spektrometer (6) zu steuern,

die Spektren umfassend Informationen für mindestens einen Wellenlängenbereich der Wellenlängen der optischen Strahlung, wobei jedes Spektrum über N Zeitabschnitte des optischen Quellstrahlungsbündels gemessen wird, wobei N eine ganze Zahl größer als oder gleich wie eins ist, wobei jeder Zeitabschnitt eine Dauer aufweist, die einer Periode $\frac{1}{f_m}$ entspricht und von einem gleichartigen Zeitabschnitt mit einer Periode $\frac{1}{f_m}$ beabstandet ist, wobei $f_m$ eine Frequenz ist, die zum Steuern der Modulationsanordnung verwendet wird und die anhand des mindestens einen Referenzsignals erlangt wird;
• wobei ein erstes Spektrometer (6) konfiguriert ist, um Spektren ($I_i(\lambda)$, wobei $i \in \{1,..,N\}$) über erste Zeitabschnitte, eines ersten optischen Quellstrahlungsbündels zu erfassen, die in Bezug auf die optische Strahlung, die von der Sammelanordnung (3, 3') gesammelt wird, phasengleich sind;
• ein zweites Spektrometer (6) konfiguriert ist, um Spektren ($Q_i(\lambda)$, wobei $i \in \{1,..,N\}$) über zweite Zeitabschnitte, eines zweiten optischen Quellstrahlungsbündels zu erfassen, die in Bezug auf die ersten Zeitabschnitte in Phasenquadratur sind;
• das erste Spektrometer konfiguriert ist, um ohne Rückgriff auf die Modulationsanordnung (5, 5') eine spektrale Größe des ersten optischen Quellstrahlungsbündels ($I_0(\lambda)$) zu messen;
• das zweite Spektrometer konfiguriert ist, um ohne Rückgriff auf die Modulationsanordnung (5, 5') eine spektrale Größe des zweiten optischen Quellstrahlungsbündels ($Q_0(\lambda)$) zu messen;

• die Spektrometeranordnung (1, 1') eine Tiefpassfiltereinheit umfasst, die konfiguriert ist, um auf die Spektren ($I_i(\lambda)$, wobei $i \in \{1,..,N\}$) angewendet zu werden, um ein Spektrum ($I(\lambda)$) zu erlangen, und um auf die Spektren ($Q_i(\lambda)$, wobei $i \in \{1,..,N\}$) angewendet zu werden, um ein Spektrum ($Q(\lambda)$) zu erlangen; und
• die Spektrometeranordnung (1, 1') eine Recheneinheit (7) umfasst, die konfiguriert ist, um ein Amplitudenspektrum ($R(\lambda)$) und ein Phasenspektrum ($\theta(\lambda)$) der optischen Strahlung, die von der Sammelanordnung (3, 3') gesammelt wird, unter Verwendung der folgenden Formeln zu berechnen:

$$R(\lambda) = \sqrt{(I(\lambda) - \frac{1}{2} I_0(\lambda))^2 + (Q(\lambda) - \frac{1}{2} Q_0(\lambda))^2}$$

und

$$\Theta(\lambda) = \arctan\left(\frac{Q(\lambda) - \frac{1}{2} Q_0(\lambda)}{I(\lambda) - \frac{1}{2} I_0(\lambda)}\right)$$

**2.** Mehrphasige lock-in Spektrometeranordnung (10), die konfiguriert ist, um an eine modulierte Quelle optischer Strahlung mit mehreren Wellenlängen (1b) angelegt zu werden, die Spektrometeranordnung (10) umfassend eine Sammelanordnung (3), die konfiguriert ist, um optische Strahlung mit mehreren Wellenlängen zu sammeln, die von der modulierten Quelle (1b) emittiert wird,
**dadurch gekennzeichnet, dass**

• die Sammelanordnung (3) mindestens eine Sammeloptik (3a) umfasst und konfiguriert ist, um mindestens ein optisches Quellstrahlungsbündel auszugeben;
• die Spektrometeranordnung (10) Folgendes umfasst:

  • eine Lock-in-anordnung (4), die konfiguriert ist, um ein Referenzsignal basierend auf der Phase und der Modulationsfrequenz der optischen Strahlung zu erzeugen, die von der Quelle optischer Strahlung (1b) emittiert wird,
  • ein einziges Spektrometer (6),
  • eine Modulationsanordnung (50), die konfiguriert ist, um basierend auf dem Referenzsignal eine Erfassung einer Vielzahl von Spektren durch das Spektrometer (6) zu steuern,

die Spektren umfassend Informationen für mindestens einen Wellenlängenbereich der Wellenlängen der optischen Strahlung, wobei jedes Spektrum über N Zeitabschnitte des optischen Quellstrahlungsbündels gemessen wird, wobei N eine ganze Zahl größer als oder gleich wie eins ist, wobei jeder Zeitabschnitt eine Dauer aufweist, die einer Periode $\frac{1}{f_m}$ entspricht und von einem gleichartigen Zeitabschnitt mit einer Periode $\frac{1}{f_m}$ beabstandet ist, wobei $f_{fm}$ eine Frequenz ist, die zum Steuern der Modulationsanordnung (50) verwendet wird und die anhand des Referenzsignals erlangt wird;
• das Spektrometer (6) konfiguriert ist, um Spektren ($I_i(\lambda)$, wobei $i \in \{1,..,N\}$) über erste Zeitabschnitte, eines ersten Bündels optischer Quellenstrahlung, die in Bezug auf die von der Sammelanordnung gesammelte optische Strahlung phasengleich sind, und dann Spektren ($Q_i(\lambda)$, wobei $i \in \{1,..,N\}$) über zweite Zeitabschnitte, des ersten Bündels optischer Quellenstrahlung, die in Bezug auf die ersten Zeitabschnitte in Phasenquadratur sind, zu erfassen;
• das Spektrometer (6) konfiguriert ist, um nacheinander mindestens einmal die Erfassungen von Spektren ($I_i(\lambda)$, wobei $i \in \{1,..,N\}$) über die ersten Zeitabschnitte, und Spektren ($Q_i(\lambda)$, wobei $i \in \{1,..,N\}$) über die zweiten Zeitabschnitte, durchzuführen;
• das Spektrometer (6) konfiguriert ist, um ohne Rückgriff auf die Modulationsanordnung eine spektrale Größe des ersten optischen Quellstrahlungsbündels ($I_0(\lambda) = Q_0(\lambda)$) zu messen;
• die Spektrometeranordnung (10) eine Tiefpassfiltereinheit umfasst, die konfiguriert ist, um auf die Spektren ($I_i(\lambda)$, wobei $i \in \{1,..,N\}$) angewendet zu werden, um ein Spektrum ($I(\lambda)$) zu erlangen, und um auf die Spektren ($Q_i(\lambda)$, wobei $i \in \{1,..,N\}$) angewendet zu werden, um ein Spektrum $Q(\lambda)$) zu erlangen; und
• die Spektrometeranordnung (10) eine Recheneinheit (7) umfasst, die konfiguriert ist, um ein Amplitudenspektrum (R(λ)) und ein Phasenspektrum ((θ(λ)) der optischen Strahlung, die von der Sammelanordnung (3) gesammelt wird, unter Verwendung der folgenden Formeln zu berechnen:

$$R(\lambda) = \sqrt{(I(\lambda) - \frac{1}{2} I_0(\lambda))^2 + (Q(\lambda) - \frac{1}{2} Q_0(\lambda))^2}$$

et

$$\theta(\lambda) = \arctan\left(\frac{Q(\lambda) - \frac{1}{2} Q_0(\lambda)}{I(\lambda) - \frac{1}{2} I_0(\lambda)}\right)$$

**3.** Mehrphasige lock-in Spektrometeranordnung (100), die konfiguriert ist, um an eine modulierte Quelle optischer Strahlung mit mehreren Wellenlängen (1b) angelegt zu werden, die Spektrometeranordnung (100) umfassend eine Sammelanordnung (300), die konfiguriert ist, um optische Strahlung mit mehreren Wellenlängen zu sammeln, die von der modulierten Quelle (1b) emittiert wird,
**dadurch gekennzeichnet, dass**

- die Sammelanordnung (300) mindestens eine Sammeloptik (3a) umfasst und konfiguriert ist, um mindestens vier identische optische Quellstrahlungsbündel auszugeben;
- die Spektrometeranordnung (100) Folgendes umfasst:
  - eine Lock-in-anordnung (400), die konfiguriert ist, um mindestens ein Referenzsignal basierend auf der Phase und der Modulationsfrequenz der optischen Strahlung zu erzeugen, die von der Quelle optischer Strahlung emittiert wird,
  - vier Spektrometer (6),
  - eine Modulationsanordnung (500), die konfiguriert ist, um basierend auf dem mindestens einen Referenzsignal eine Erfassung einer Vielzahl von Spektren durch jedes Spektrometer (6) zu steuern,

die Spektren umfassend Informationen für mindestens einen Wellenlängenbereich der Wellenlängen der optischen Strahlung, wobei jedes Spektrum über N Zeitabschnitte des optischen Quellstrahlungsbündels gemessen wird, wobei N eine ganze Zahl größer als oder gleich wie eins ist, wobei jeder Zeitabschnitt eine Dauer aufweist, die einer Periode $\frac{1}{f_m}$ entspricht und von einem gleichartigen Zeitabschnitt mit einer Periode $\frac{1}{f_m}$ beabstandet ist, wobei $f_{fm}$ eine Frequenz ist, die zum Steuern der Modulationsanordnung (500) verwendet wird und die anhand des mindestens einen Referenzsignals erlangt wird;
- wobei ein erstes Spektrometer (6) konfiguriert ist, um Spektren ($I_{1i}(\lambda)$, wobei $i \in \{1,..,N\}$) über erste Zeitabschnitte, eines ersten optischen Quellstrahlungsbündels zu erfassen, die in Bezug auf die optische Strahlung, die von der Sammelanordnung (300) gesammelt wird, phasengleich sind;
- ein zweites Spektrometer (6) konfiguriert ist, um Spektren ($Q_{1i}(\lambda)$, wobei $i \in \{1,..,N\}$) über zweite Zeitabschnitte, eines zweiten optischen Quellstrahlungsbündels, in Phasenquadratur der Phase und in Phasenvoreilung in Bezug auf die ersten Zeitabschnitte zu erfassen;
- ein drittes Spektrometer (6) konfiguriert ist, um Spektren ($I_{2i}(\lambda)$, wobei $i \in \{1,..,N\}$) über dritte Zeitabschnitte, eines dritten optischen Quellstrahlungsbündels, in Phasenquadratur der Phase und in Phasenvoreilung in Bezug auf die zweiten Zeitabschnitte zu erfassen;
- ein viertes Spektrometer (6) konfiguriert ist, um Spektren ($I_{2i}(\lambda)$, wobei $i \in \{1,..,N\}$) über vierte Zeitabschnitte, eines vierten optischen Quellstrahlungsbündels, in Phasenquadratur der Phase und in Phasenvoreilung in Bezug auf die dritten Zeitabschnitte zu erfassen;
- die Spektrometeranordnung (100) eine Tiefpassfiltereinheit umfasst, die konfiguriert ist, um auf die Spektren ($I_{1i}(\lambda)$, wobei $i \in \{1,..,N\}$) angewendet zu werden, um ein Spektrum ($I_1(\lambda)$) zu erlangen, um auf die Spektren ($Q_{1i}(\lambda)$, wobei $i \in \{1,..,N\}$) angewendet zu werden, um ein Spektrum ($Q_1(\lambda)$) zu erlangen, um auf die Spektren ($I_{2i}(\lambda)$, wobei $i \in \{1,..,N\}$) angewendet zu werden, um ein Spektrum ($I_2(\lambda)$) zu erlangen, und um auf die Spektren ($Q_{2i}(\lambda)$, wobei $i \in \{1,..,N\}$) angewendet zu werden, um ein Spektrum ($Q_2(\lambda)$) zu erlangen; und
- die Spektrometeranordnung (100) eine Recheneinheit (7) umfasst, die konfiguriert ist, um ein Amplituden-

spektrum ($R(\lambda)$) und ein Phasenspektrum ($\theta(\lambda)$) der optischen Strahlung, die von der Sammelanordnung (300) gesammelt wird, unter Verwendung der folgenden Formeln zu berechnen:

$$R(\lambda) = \sqrt{\left(I_1(\lambda) - I_2(\lambda)\right)^2 + (Q_1(\lambda) - Q_2(\lambda))^2}$$

und

$$\Theta(\lambda) = \arctan\left(\frac{Q_1(\lambda) - Q_2(\lambda)}{I_1(\lambda) - I_2(\lambda)}\right).$$

**4.** Spektrometeranordnung (1; 1'; 10) nach einem der Ansprüche 1 bis 3, **dadurch gekennzeichnet, dass** die Sammelanordnung (3; 3') ferner eine Teileranordnung für optisches Strahlungsbündel (3c) umfasst.

**5.** Spektrometeranordnung (100) nach einem der Ansprüche 1 bis 3, **dadurch gekennzeichnet, dass** die Sammelanordnung (300) mindestens so viele Sammeloptiken (3a) umfasst, die konfiguriert sind, um die optische Strahlung zu sammeln, die von der Quelle optischer Strahlung (1b) emittiert wird, wie es Spektrometer (6) gibt.

**6.** Spektrometeranordnung (1; 1'; 10; 100) nach einem der Ansprüche 1 bis 5, **dadurch gekennzeichnet, dass** mindestens eine der Sammeloptiken (3a, 3b) ausgewählt ist aus einem Teleskop, einer Ulbricht-Kugel, einem Fotoobjektiv, einer Sammellinse, einer Beleuchtungsmesszelle und einer Leuchtdichtemesszelle.

**7.** Spektrometeranordnung (1; 1'; 100) nach einem der Ansprüche 1 bis 6, **dadurch gekennzeichnet, dass** die Modulationsanordnung (5; 5'; 500) mindestens einen optischen Modulator (5a) umfasst, wobei der mindestens eine optische Modulator (5a) vorzugsweise ausgewählt ist aus einem mechanischen Modulator, einem elektrooptischen Modulator und einem akustooptischen Modulator.

**8.** Spektrometeranordnung (10) nach einem der Ansprüche 1 bis 6, **dadurch gekennzeichnet, dass** die Modulationsanordnung (50) in jedes Spektrometer (6) integriert ist und konfiguriert ist, um die Erfassung jedes Spektrometers (6) mittels eines Auslösungssignals zu steuern.

**9.** Spektrometeranordnung (1; 1'; 10; 100) nach einem der Ansprüche 1 bis 8, **dadurch gekennzeichnet, dass** die Modulationsanordnung (5; 5'; 50; 500) konfiguriert ist, um die Modulationsfrequenz der optischen Strahlung, die von der Quelle optischer Strahlung emittiert wird, als Steuerfrequenz $f_m$ zu verwenden.

**10.** Spektrometeranordnung (1; 1'; 10; 100) nach einem der Ansprüche 1 bis 8, **dadurch gekennzeichnet, dass** die Modulationsanordnung (5; 5'; 50; 500) konfiguriert ist, um eine harmonische Frequenz der Modulationsfrequenz der optischen Strahlung, die von der Quelle optischer Strahlung (1b) emittiert wird, als Steuerfrequenz $f_m$ zu verwenden, sodass das Amplitudenspektrum ($R(\lambda)$) und das Phasenspektrum ($\theta(\lambda)$) die Nichtlinearität eines Mediums (2) charakterisieren, das sich zwischen der Quelle optischer Strahlung und der Sammelanordnung (3) befindet.

**11.** Spektrometeranordnung (1; 1'; 10; 100) nach einem der Ansprüche 1 bis 10, **dadurch gekennzeichnet, dass** die Lock-in-anordnung (4; 4': 400) einen Signalgenerator umfasst, der das mindestens eine Referenzsignal abhängig von der elektrischen Versorgung der Quelle optischer Strahlung (1b) erzeugt.

**12.** Spektrometeranordnung (1; 1'; 10) nach einem der Ansprüche 1 bis 10, **dadurch gekennzeichnet, dass** die Spektrometeranordnung (1; 1'; 10) ferner eine optische Erfassungsanordnung (8) umfasst, die konfiguriert ist, um die Modulationsfrequenz und die Phase der optischen Strahlung, die von der Quelle optischer Strahlung (1b) emittiert wird, in Echtzeit zu messen, und die Lock-in-anordnung (4; 4') mit der optischen Erfassungsanordnung (8) verbunden ist, um das mindestens eine Referenzsignal abhängig von der gemessenen Phase und der gemessenen Modulationsfrequenz zu erzeugen.

**13.** Spektrometeranordnung (1') nach Anspruch 12, **dadurch gekennzeichnet, dass** die Sammelanordnung (3') mindestens eine Sammeloptik (3b) umfasst, die der optischen Erfassungsanordnung gewidmet ist.

**14.** Spektrometeranordnung (1) nach Anspruch 12, wenn abhängig von Anspruch 4, **dadurch gekennzeichnet, dass** die Teileranordnung für optisches Strahlungsbündel (3c) konfiguriert ist, um mindestens ein zusätzliches optisches

Strahlungsbündel auszugeben, das konfiguriert ist, um der optischen Erfassungsanordnung (8) zugeführt zu werden.

**15.** Spektrometeranordnung (1; 1'; 10) nach einem der Ansprüche 12 bis 14, **dadurch gekennzeichnet, dass** mindestens eine Kommunikationskette zwischen der optischen Erfassungsanordnung (8), der Lock-in-anordnung (4; 4') und der Modulationsanordnung (5; 5'; 50) mindestens teilweise mittels einer Telekommunikationstechnik realisiert wird, die ausgewählt ist aus: VLC (Visible Light Communication), Li-Fi, Wi-Fi, Powerline Communication (PLC), Mobiltelefonie, vorzugsweise 5G, einem Hochfrequenzprotokoll oder einem proprietären Protokoll.

**16.** Spektrometeranordnung (200) nach einem der Ansprüche 1 bis 15, **dadurch gekennzeichnet, dass** sie ferner eine motorisierte Plattform (9) umfasst, die geeignet ist, um die Sammelanordnung (3) der Reihe nach auf eine Vielzahl von Quellen optischer Strahlung (1b) zu richten.

**17.** Verwendung einer Spektrometeranordnung (1; 1'; 10; 100) nach einem der Ansprüche 1 bis 16, **dadurch gekennzeichnet, dass** die Verwendung die folgenden Schritte umfasst:

• Aufstellen einer Spektrometeranordnung (1; 1'; 10; 100) derart, dass die Sammelanordnung (3; 3'; 300) geeignet ist, um nacheinander mindestens ein in der Umgebung angeordnetes Beleuchtungselement anzuvisieren, sodass die Spektrometeranordnung (1; 1'; 10; 100) nacheinander jedes Beleuchtungselement als Quelle optischer Strahlung (1b) verwendet, wobei jedes Beleuchtungselement eine modulierte Quelle optischer Strahlung mit mehreren Wellenlängen (1b) ist, und
• Verwenden der Spektrometeranordnung (1; 1'; 10; 100), um eine Technik der differentiellen optischen Absorptionsspektroskopie zu implementieren, um die Konzentration von mindestens einem Element zu messen, das in Luft vorhanden ist, die sich zwischen jedem Beleuchtungselement und der Sammelanordnung (3; 3'; 300) befindet.

**18.** Verwendung nach Anspruch 17, **dadurch gekennzeichnet, dass** das mindestens eine Beleuchtungselement mindestens in einem blauen Spektralbereich emittiert und die Spektrometeranordnung (1; 1'; 10; 100) konfiguriert ist, um eine $NO_2$-Konzentration in der Luft und einen Lufttrübungsindex zu messen.

**19.** Verwendung nach Anspruch 17 oder Anspruch 18, **dadurch gekennzeichnet, dass** die Spektrometeranordnung (1; 1'; 10; 100) eine zeitliche Modulation der von dem mindestens einen Beleuchtungselement emittierten optischen Strahlung mit einer dominanten Modulationsfrequenz auswertet, um die Verwendung in Gegenwart von Tageslicht durchführen zu können, wobei die dominante Modulationsfrequenz vorzugsweise zwischen 90 Hz und 130 Hz liegt.

**20.** Verfahren lock-in Spektrometrie, angewendet auf eine modulierte Quelle optischer Strahlung mit mehreren Wellenlängen, **dadurch gekennzeichnet, dass** es die folgenden Schritte umfasst:

- Empfangen der optischen Strahlung von der Quelle,
- anhand der empfangenen optischen Strahlung, Erzeugen mindestens eines optischen Quellstrahlungsbündels, wobei alle optischen Quellstrahlungsbündel identisch sind,
- anhand des mindestens einen optischen Quellstrahlungsbündels, Erzeugen einer Vielzahl von ersten Zeitabschnitten des optischen Strahlungsbündels, die als phasengleich bezeichnet werden, und einer Vielzahl von zweiten Zeitabschnitten des optischen Strahlungsbündels, die in Bezug auf die ersten Zeitabschnitte in Phasenquadratur sind,
- Messen, mittels mindestens eines Spektrometers, einer spektralen Menge jedes optischen Quellstrahlungsbündels $I_0(\lambda)$, $Q_0(\lambda)$,
- Erfassen, mittels des mindestens einen Spektrometers, von Spektren ($I_i(\lambda)$, wobei $i \in \{1,..,N\}$) über die ersten Zeitabschnitte des mindestens einen optischen Quellstrahlungsbündels, wobei jedes Spektrum über N Zeitabschnitte des optischen Quellstrahlungsbündels gemessen wird,
- Erfassen, mittels des mindestens einen Spektrometers, von Spektren ($Q_i(\lambda)$, wobei $i \in \{1,..,N\}$) über die zweiten Zeitabschnitte des mindestens einen optischen Quellstrahlungsbündels, wobei jedes Spektrum über N Zeitabschnitte des optischen Quellstrahlungsbündels gemessen wird,
- Filtern, durch eine Tiefpassfiltereinheit, der Spektren ($I_i(\lambda)$, wobei $i \in \{1,..,N\}$), um ein Spektrum $I(\lambda)$ zu erlangen, und der Spektren ($Q_i(\lambda)$, wobei $i \in \{1,..,N\}$), um ein Spektrum $Q(\lambda)$ zu erlangen,
- Berechnen, durch eine Recheneinheit, eines Amplitudenspektrum $R(\lambda)$ und eines Phasenspektrums ($\theta(\lambda)$) der gesammelten optischen Strahlung mittels der folgenden Formeln:

$$R(\lambda) = \sqrt{\left(I(\lambda) - \frac{1}{2}I_0(\lambda)\right)^2 + \left(Q(\lambda) - \frac{1}{2}Q_0(\lambda)\right)^2}$$

und

$$\theta(\lambda) = \arctan\left(\frac{Q(\lambda) - \frac{1}{2}Q_0(\lambda)}{I(\lambda) - \frac{1}{2}I_0(\lambda)}\right).$$

**21.** Verfahren lock-in Spektrometrie, angewendet auf eine modulierte Quelle optischer Strahlung mit mehreren Wellenlängen, für ein mehrphasiges lock-in Spektrometer (100) nach Anspruch 3, **dadurch gekennzeichnet, dass** es die folgenden Schritte umfasst:

- Empfangen, durch die Sammelanordnung (300), der optischen Strahlung von der Quelle,
- anhand der empfangenen optischen Strahlung, Erzeugen eines ersten optischen Quellstrahlungsbündels, eines zweiten optischen Quellstrahlungsbündels, eines dritten optischen Quellstrahlungsbündels und eines vierten optischen Quellstrahlungsbündels, die identisch sind,
- anhand des ersten, zweiten, dritten und vierten optischen Quellstrahlungsbündels, Erzeugen einer Vielzahl von ersten Zeitabschnitten des optischen Strahlungsbündels, die als phasengleich bezeichnet werden, einer Vielzahl von zweiten Zeitabschnitten des optischen Strahlungsbündels in Phasenquadratur und in Phasenvoreilung in Bezug auf die ersten Zeitabschnitte, einer Vielzahl von dritten Zeitabschnitten des optischen Strahlungsbündels in Phasenquadratur und in Phasenvoreilung in Bezug auf die zweiten Zeitabschnitte und einer Vielzahl von vierten Zeitabschnitten des optischen Strahlungsbündels in Phasenquadratur und in Phasenvoreilung in Bezug auf die dritten Zeitabschnitte,
- Erfassen, mittels des ersten Spektrometers von Spektren ($I_{1i}(\lambda)$, wobei $i \in \{1,..,N\}$) über die ersten Zeitabschnitte, wobei jedes Spektrum über N Zeitabschnitte des optischen Quellstrahlungsbündels gemessen wird,
- Erfassen, mittels des zweiten Spektrometers von Spektren ($Q_{1i}(\lambda)$, wobei $i \in \{1,..,N\}$) über die zweiten Zeitabschnitte, wobei jedes Spektrum über N Zeitabschnitte des optischen Quellstrahlungsbündels gemessen wird,
- Erfassen, mittels des dritten Spektrometers von Spektren ($I_{2i}(\lambda)$, wobei $i \in \{1,..,N\}$) über die dritten Zeitabschnitte, wobei jedes Spektrum über N Zeitabschnitte des optischen Quellstrahlungsbündels gemessen wird,
- Erfassen, mittels des vierten Spektrometers von Spektren ($Q_{2i}(\lambda)$, wobei $i \in \{1,..,N\}$) über die vierten Zeitabschnitte, wobei jedes Spektrum über N Zeitabschnitte des optischen Quellstrahlungsbündels gemessen wird,
- Filtern, durch die Tiefpassfiltereinheit, der Spektren ($I_{1i}(\lambda)$, wobei $i \in \{1,..,N\}$)um ein Spektrum ($I_1(\lambda)$) zu erlangen, der Spektren ($Q_{1i}(\lambda)$, wobei $i \in \{1,..,N\}$), um ein Spektrum ($Q_1(\lambda)$) zu erlangen, der Spektren ($I_{2i}(\lambda)$, wobei $i \in \{1,..,N\}$) , um ein Spektrum ($I_2(\lambda)$) zu erlangen, und der Spektren ($Q_{2i}(\lambda)$, wobei $i \in \{1,..,N\}$), um ein Spektrum ($Q_2(\lambda)$) zu erlangen,
- Berechnen, durch die Recheneinheit, eines Amplitudenspektrum $R(\lambda)$ und eines Phasenspektrums $\theta(\lambda)$ der gesammelten optischen Strahlung mittels der folgenden Formeln:

$$R(\lambda) = \sqrt{\left(I_1(\lambda) - I_2(\lambda)\right)^2 + (Q_1(\lambda) - Q_2(\lambda))^2}$$

und

$$\theta(\lambda) = \arctan\left(\frac{Q_1(\lambda) - Q_2(\lambda)}{I_1(\lambda) - I_2(\lambda)}\right).$$

## Claims

**1.** A multiphase lock-in spectrometer assembly (1, 1') configured to be applied to a modulated source of multi-wavelength optical radiation (1b), said spectrometer assembly (1, 1') comprising a collection assembly (3) configured to collect multi-wavelength optical radiation emitted by the modulated source (1b),
**characterized in that**:

the collection assembly (3, 3') comprises at least one collection optic (3a) and is configured to output at least two identical source optical radiation beams;
the spectrometer assembly (1, 1') comprises:

a lock-in assembly (4) configured to generate at least one reference signal based on the phase and modulation frequency of the optical radiation emitted by the optical radiation source (1b),
two spectrometers (6),
a modulation assembly (5, 5') configured to control, based on the at least one reference signal, an acquisition by each spectrometer (6) of a plurality of spectra,

the spectra comprising information for at least one wavelength range of the optical radiation wavelengths, each spectrum being measured on N time sections of source optical radiation beam, N being an integer greater than or equal to one, each time section having a duration corresponding to a period $\frac{1}{f_m}$ and being spaced from a time section of the same type by a period $\frac{1}{f_m}$, $f_m$ being a frequency used to control the modulation assembly obtained from the at least one reference signal;

- a first spectrometer (6) is configured to acquire the spectra ($I_i(\lambda)$, with $i \in \{1,..,N\}$) on first time sections, of a first of source optical radiation beam, said to be in phase relative to the optical radiation collected by the collection assembly (3, 3');
- a second spectrometer (6) is configured to acquire the spectra ($Qi(\lambda)$, with $i \in \{1,..,N\}$) on second time sections, of a second source optical radiation beam, in phase quadrature relative to the first time sections;
- the first spectrometer is configured to measure, without recourse to the modulation assembly (5, 5'), a spectral quantity of the first source optical radiation beam ($I_0(\lambda)$);
- the second spectrometer is configured to measure, without recourse to the modulation assembly (5, 5'), a spectral quantity of the second source optical radiation beam ($Q_0(\lambda)$);
- the spectrometer assembly (1, 1') comprises a low-pass filter unit configured to be applied to the spectra ($I_i(\lambda)$, with $i \in \{1,..,N\}$) in order to obtain a spectrum ($I(\lambda)$), and to be applied to the spectra ($Q_i(\lambda)$, with $i \in \{1,..,N\}$) in order to obtain a spectrum ($Q(\lambda)$); and
- the spectrometer assembly (1, 1') comprises a calculation unit (7) configured to calculate an amplitude spectrum ($R(\lambda)$) and a phase spectrum ($\theta(\lambda)$) of the optical radiation collected by the collection assembly (3, 3') using the following formulae:

$$R(\lambda) = \sqrt{(I(\lambda) - \frac{1}{2}I_0(\lambda))^2 + (Q(\lambda) - \frac{1}{2}Q_0(\lambda))^2}$$

and

$$\theta(\lambda) = \arctan\left(\frac{Q(\lambda) - \frac{1}{2}Q_0(\lambda)}{I(\lambda) - \frac{1}{2}I_0(\lambda)}\right)$$

**2.** A multiphase lock-in spectrometer assembly (10) configured to be applied to a modulated source of multi-wavelength optical radiation (1b), said spectrometer assembly (10) comprising a collection assembly (3) configured to collect a multi-wavelength optical radiation emitted by the modulated source (1b),
**characterized in that**:

- the collection assembly (3) comprises at least one collection optic (3a) and is configured to output at least one

source optical radiation beam;

• the spectrometer assembly (10) comprises:

• a lock-in assembly (4) configured to generate a reference signal based on the phase and modulation frequency of the optical radiation emitted by the optical radiation source (1b),

• a single spectrometer (6),

• a modulation assembly (50) configured to control, based on the reference signal, an acquisition by the spectrometer (6) of a plurality of spectra,

the spectra comprising information for at least one wavelength range of the optical radiation wavelengths, each spectrum being measured on N time sections of the source optical radiation beam, N being an integer greater than or equal to one, each time section having a duration corresponding to a period $\frac{1}{f_m}$ and being spaced from a time section of the same type by a period $\frac{1}{f_m}$, with $f_m$ a frequency used to control the modulation assembly (50) obtained from the reference signal ;

• the spectrometer (6) is configured to acquire the spectra ($I_i(\lambda)$, with $i \in \{1,..,N\}$) on first time sections, of a first source optical radiation beam, said to be in phase relative to the optical radiation collected by the collection assembly, then the spectra ($Q_i(\lambda)$, with $i \in \{1,..,N\}$) on second time sections, of the first source optical radiation beam, in phase quadrature relative to the first time sections;

• the spectrometer (6) is configured to successively carry out, at least once, the acquisition of the spectra ($Ii(\lambda)$, with $i \in \{1,..,N\}$) on the first time sections and the spectra ($Q_i(\lambda)$, with $i \in \{1,..,N\}$) on the second time sections;

• the spectrometer (6) is configured to measure, without recourse to the modulation assembly, a spectral quantity of the first source optical radiation beam ($I_0(\lambda) = Q_0(\lambda)$) ;

• the spectrometer assembly (10) comprises a low-pass filter unit configured to be applied to the spectra ($I_i(\lambda)$, with $i \in \{1,..,N\}$) in order to obtain a spectrum (I(A)), and to be applied to the spectra ($Q_i(\lambda)$, with $i \in \{1,..,N\}$) in order to obtain a spectrum ($Q(\lambda)$); and

• the spectrometer assembly (10) comprises a calculation unit (7) configured to calculate an amplitude spectrum ($R(\lambda)$) and a phase spectrum ($\theta(\lambda)$) of the optical radiation collected by the collection assembly (3) using the following formulae:

$$R(\lambda) = \sqrt{(I(\lambda) - \frac{1}{2}I_0(\lambda))^2 + (Q(\lambda) - \frac{1}{2}Q_0(\lambda))^2}$$

and

$$\theta(\lambda) = \arctan\left(\frac{Q(\lambda) - \frac{1}{2}Q_0(\lambda)}{I(\lambda) - \frac{1}{2}I_0(\lambda)}\right)$$

**3.** A multiphase lock-in spectrometer assembly (100) configured to be applied to a modulated source of multi-wavelength optical radiation (1b), said spectrometer assembly (100) comprising a collection assembly (300) configured to collect multi-wavelength optical radiation emitted by the modulated source (1b),
**characterized in that**:

• the collection assembly (300) comprises at least one collection optic (3a) and is configured to output at least four identical source optical radiation beams;

• the spectrometer assembly (100) comprises:

• a lock-in assembly (400) configured to generate at least one reference signal based on the phase and modulation frequency of the optical radiation emitted by the optical radiation source,

• four spectrometers (6),

• a modulation assembly (500) configured to control, based on the at least one reference signal, an acquisition by each spectrometer (6) of a plurality of spectra,

the spectra comprising information for at least one wavelength range of the optical radiation wavelengths, each spectrum being measured on N time sections of the source optical radiation beam, N being an integer greater than or equal to one, each time section having a duration corresponding to a period $\frac{1}{f_m}$ and being spaced from a time section of the same type by a period $\frac{1}{f_m}$, with $f_m$ a frequency used to control the modulation assembly (500) obtained from the at least one reference signal;

• a first spectrometer (6) is configured to acquire the spectra ($I_{1i}(\lambda)$, with $i \in \{1,..,N\}$) on first time sections, of a first source optical radiation beam, said to be in phase relative to the optical radiation collected by the collection assembly (300);
• a second spectrometer (6) is configured to acquire the spectra ($Q_{1i}(\lambda)$, with $i \in \{1,..,N\}$) on second time sections, of a second source optical radiation beam, in phase quadrature and in phase advance relative to the first time sections;
• a third spectrometer (6) is configured to acquire the spectra ($I_{2i}(\lambda)$, with $i \in \{1,..,N\}$) on third time sections, of a third source optical radiation beam, in phase quadrature and in phase advance relative to the second time sections;
• a fourth spectrometer (6) is configured to acquire the spectra ($Q_{2i}(\lambda)$, with $i \in \{1,..,N\}$) on fourth time sections, of a fourth source optical radiation beam, in phase quadrature and in phase advance relative to the third time sections;
• the spectrometer assembly (100) comprises a low-pass filter unit configured to be applied to the spectra ($I_{1i}(\lambda)$, with $i \in \{1,..,N\}$) in order to obtain a spectrum ($I_1(\lambda)$), to be applied to the spectra ($Q_1i(\lambda)$, with $i \in \{1,..,N\}$) in order to obtain a spectrum ($Q_1(\lambda)$), to be applied to the spectra ($I_2i(\lambda)$, with $i \in \{1,..,N\}$) in order to obtain a spectrum ($I_2(\lambda)$), and to be applied to the spectra ($Q_{2i}(\lambda)$, with $i \in \{1,..,N\}$) in order to obtain a spectrum ($Q_2(\lambda)$); and
• the spectrometer assembly (100) comprises a calculation unit (7) configured to calculate an amplitude spectrum ($R(\lambda)$) and a phase spectrum ($\theta(\lambda)$) of the optical radiation collected by the collection assembly (300) using the following formulae:

$$R(\lambda) = \sqrt{\left(I_1(\lambda) - I_2(\lambda)\right)^2 + (Q_1(\lambda) - Q_2(\lambda))^2}$$

and

$$\theta(\lambda) = \arctan\left(\frac{Q_1(\lambda) - Q_2(\lambda)}{I_1(\lambda) - I_2(\lambda)}\right)$$

4. The spectrometer assembly (1; 1'; 10) according to any one of claims 1 to 3, **characterized in that** the collection assembly (3; 3') further comprises an optical radiation beam splitting assembly (3c).

5. The spectrometer assembly (100) according to any one of claims 1 to 3, **characterized in that** the collection assembly (300) comprises at least as many collection optics (3a) configured to collect the optical radiation emitted by the optical radiation source (1b) as there are spectrometers (6).

6. The spectrometer assembly (1; 1'; 10; 100) according to any one of claims 1 to 5, **characterized in that** at least one of the collection optics (3a, 3b) is chosen from among a telescope, an integrating sphere, a photographic lens, a converging lens, an illuminance measurement cell and a luminance measurement cell.

7. The spectrometer assembly (1; 1'; 100) according to any one of claims 1 to 6, **characterized in that** the modulation assembly (5; 5'; 500) comprises at least one optical modulator (5a), the at least one optical modulator (5a) preferably being chosen from among a mechanical modulator, an electro-optical modulator and an acousto-optical modulator.

8. The spectrometer assembly (10) according to any one of claims 1 to 6, **characterized in that** the modulation assembly (50) is integrated into each spectrometer (6) and is configured to control the acquisition of each spectrometer (6) by means of a trigger signal.

9. The spectrometer assembly (1; 1'; 10; 100) according to any one of claims 1 to 8, **characterized in that** the modulation assembly (5; 5'; 50; 500) is configured to use the modulation frequency of the optical radiation emitted by the optical radiation source as control frequency $f_m$.

10. The spectrometer assembly (1; 1'; 10; 100) according to any one of claims 1 to 8, **characterized in that** the modulation assembly (5; 5'; 50 ; 500) is configured to use a harmonic frequency of the modulation frequency of the optical radiation emitted by the optical radiation source (1b) as the control frequency $f_m$, such that the amplitude spectrum ($R(\lambda)$) and the phase spectrum ($\theta(\lambda)$) characterize the non-linearity of a medium (2) located between the optical radiation source and the collection assembly (3).

11. The spectrometer assembly (1; 1'; 10; 100) according to any one of claims 1 to 10, **characterized in that** the lock-in assembly (4; 4'; 400) comprises a signal generator generating the at least one reference signal as a function of the power supply to the optical radiation source (1b).

12. The spectrometer assembly (1; 1'; 10) according to any one of claims 1 to 10, **characterized in that** the spectrometer assembly (1; 1'; 10) further comprises an optical detection assembly (8) configured to measure, in real time, the modulation frequency and phase of the optical radiation emitted by the optical radiation source (1b), and the lock-in assembly (4 ; 4') is connected to the optical detection assembly (8) so as to generate the at least one reference signal as a function of the measured phase and the measured modulation frequency.

13. The spectrometer assembly (1') according to claim 12, **characterized in that** the collection assembly (3') comprises at least one collection optic (3b) dedicated to the optical detection assembly.

14. The spectrometer assembly (1) according to claim 12 when dependent on claim 4, **characterized in that** the optical radiation beam splitting assembly (3c) is configured to output at least one additional optical radiation beam configured to be output to the optical detection assembly (8).

15. The spectrometer assembly (1; 1'; 10) according to any one of claims 12 to 14, **characterized in that** at least one communication chain between the optical detection assembly (8), the lock-in assembly (4; 4') and the modulation assembly (5; 5'; 50) is, at least in part, carried out using a telecommunication technique selected from among: VLC (visible light communication), Li-Fi, Wi-Fi, power line carrier (PLC), mobile telephony, preferably 5G, a radio frequency protocol, or a proprietary protocol.

16. The spectrometer assembly (200) according to any one of claims 1 to 15, **characterized in that** it further comprises a motorized platform (9) able to direct the collection assembly (3) in turn toward a plurality of optical radiation sources (1b).

17. A use of a spectrometer assembly (1; 1'; 10; 100) according to any one of claims 1 to 16, **characterized in that** the use comprises the following steps:

    • positioning a spectrometer assembly (1; 1'; 10; 100) so that the collection assembly (3; 3'; 300) is able to successively aim at at least one illuminating element arranged in the environment so that the spectrometer assembly (1; 1'; 10; 100) successively uses each illuminating element as a source of optical radiation (1b), each illuminating element being a modulated source of multi-wavelength optical radiation (1b), and
    • using the spectrometer assembly (1; 1'; 10; 100) to implement a differential optical absorption spectroscopy technique to measure the concentration of at least one element present in the air located between each lighting element and the collection assembly (3; 3'; 300).

18. The use according to claim 17, **characterized in that** the at least one lighting element emits at least in a blue spectral range and the spectrometer assembly (1; 1'; 10; 100) is configured to measure a concentration of $NO_2$ in the air and a turbidity index of the air.

19. The use according to claim 17 or claim 18, **characterized in that** the spectrometer assembly (1; 1'; 10; 100) exploits a time modulation of the optical radiation emitted by the at least one lighting element at a dominant modulation frequency in order to be able to carry out the use in the presence of daylight, the dominant modulation frequency preferably being between 90 Hz and 130 Hz.

**20.** A lock-in spectrometry method applied to a modulated source of multi-wavelength optical radiation, **characterized in that** it comprises the following steps:

- receiving optical radiation from the source,
- from the received optical radiation, generating at least one source optical radiation beam, all the source optical radiation beams being identical,
- from the at least one source optical radiation beam, generating a plurality of first time sections of the optical radiation beam called in-phase and a plurality of second time sections of the optical radiation beam in phase quadrature relative to the first time sections,
- measuring, by means of at least one spectrometer, a spectral quantity of each source optical radiation beam $I_0(\lambda)$, $Q_0(\lambda)$,
- acquiring, by means of the at least one spectrometer, the spectra ($I_i(\lambda)$, with $i \in \{1,..,N\}$) on the first time sections of the at least one source optical radiation beam, each spectrum being measured on N time sections of the source optical radiation beam,
- acquireing by means of the at least one spectrometer, the spectra ($Q_i(\lambda)$, with $i \in \{1,..,N\}$) on the second time sections of the at least one source optical radiation beam, each spectrum being measured on N time sections of the source optical radiation beam,
- filtering, by a low-pass filter unit, the spectra ($I_i(\lambda)$, with $i \in \{1,..,N\}$) in order to obtain a spectrum, $I(\lambda)$, and the spectra ($Q_i(\lambda)$, with $i \in \{1,..,N\}$) in order to obtain a spectrum $Q(\lambda)$,
- calculate, using a calculation unit, an amplitude spectrum $R(\lambda)$ and a phase spectrum $\theta(\lambda)$ of the collected optical radiation using the following formulae:

$$R(\lambda) = \sqrt{(I(\lambda) - \frac{1}{2}I_0(\lambda))^2 + (Q(\lambda) - \frac{1}{2}Q_0(\lambda))^2}$$

and

$$\theta(\lambda) = \arctan\left(\frac{Q(\lambda) - \frac{1}{2}Q_0(\lambda)}{I(\lambda) - \frac{1}{2}I_0(\lambda)}\right)$$

**21.** A method of lock-in spectrometry applied to a modulated source of multi-wavelength optical radiation, for a multiphase lock-in spectrometer (100) according to claim 3, **characterized in that** it comprises the following steps:

- receiving, by the collection assembly (300), optical radiation from the source,
- from the received optical radiation, generating a first source optical radiation beam, a second source optical radiation beam, a third source optical radiation beam and a fourth source optical radiation beam, which are identical,
- from the first, second, third and fourth source optical radiation beams, generating a plurality of first time sections of the optical radiation beam called in-phase, a plurality of second time sections of the optical radiation beam in phase quadrature and in phase advance relative to the first time sections, a plurality of third time sections of the optical radiation beam in phase quadrature and in phase advance relative to the second time sections, and a plurality of fourth time sections of the optical radiation beam in phase quadrature and in phase advance relative to the third time sections,
- acquiring, by means of the first spectrometer, the spectra ($I_{1i}(\lambda)$, with $i \in \{1,..,N\}$) on the first time sections, each spectrum being measured on N time sections of the source optical radiation beam,
- acquiring, by means of the second spectrometer, the spectra ($Q_{1i}(\lambda)$, with $i \in \{1,..,N\}$) on the second time sections, each spectrum being measured on N time sections of the source optical radiation beam,
- acquiring, by means of the third spectrometer, the spectra ($I_{2i}(\lambda)$, with $i \in \{1,..,N\}$) on the third time sections, each spectrum being measured on N time sections of the source optical radiation beam,
- acquiring, by means of the fourth spectrometer, the spectra ($Q_{2i}(\lambda)$, with $i \in \{1,..,N\}$) on the fourth time sections, each spectrum being measured on N time sections of the source optical radiation beam,
- filtering, by using the low-pass filter unit, the spectra ($I_{1i}(\lambda)$, with $i \in \{1,..,N\}$) in order to obtain a spectrum ($I_1(\lambda)$), the spectra ($Q_{1i}(\lambda)$, with $i \in \{1,..,N\}$) in order to obtain a spectrum ($Q_1(\lambda)$), the spectra ($I_{2i}(\lambda)$, with $i \in \{1,..,N\}$) in

order to obtain a spectrum ($I_2(\lambda)$), and the spectra ($Q_{2i}(\lambda)$, with $i \in \{1,..,N\}$) in order to obtain a spectrum ($Q_2(\lambda)$),
- calculating, by using the calculation unit, an amplitude spectrum R(A) and a phase spectrum $\theta(\lambda)$ of the collected optical radiation using the following formulae:

$$R(\lambda) = \sqrt{\left(I_1(\lambda) - I_2(\lambda)\right)^2 + (Q_1(\lambda) - Q_2(\lambda))^2}$$

and

$$\Theta(\lambda) = \arctan\left(\frac{Q_1(\lambda) - Q_2(\lambda)}{I_1(\lambda) - I_2(\lambda)}\right)$$

[Fig. 1]

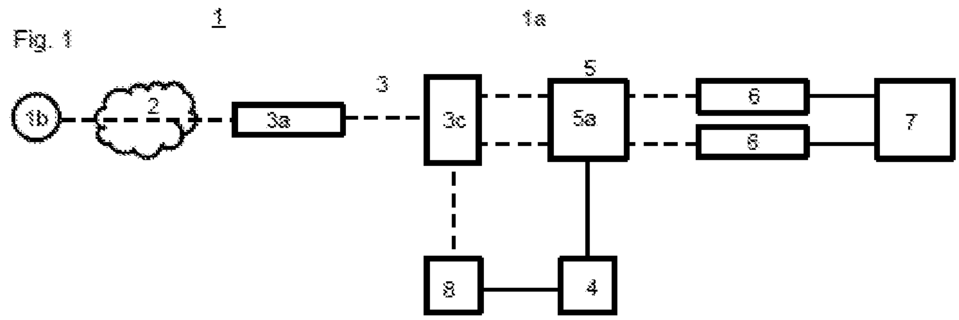


[Fig. 2]

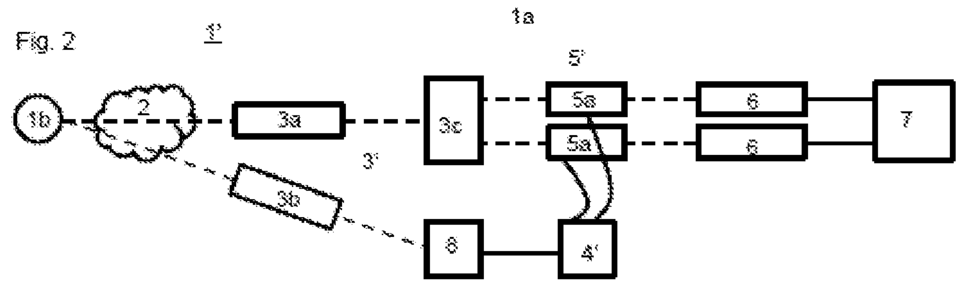


[Fig. 3]

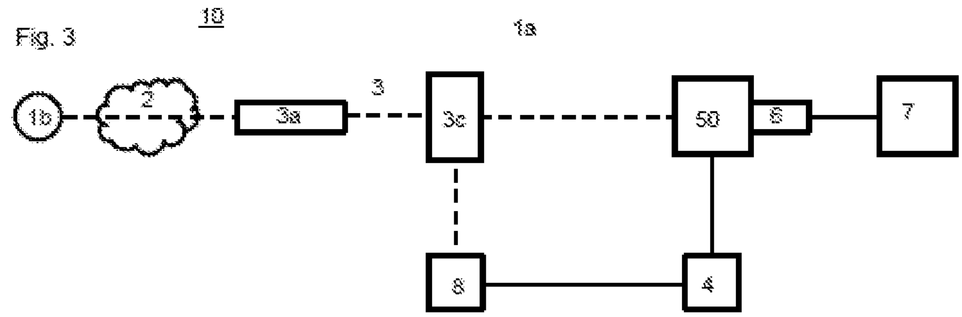


[Fig. 4]

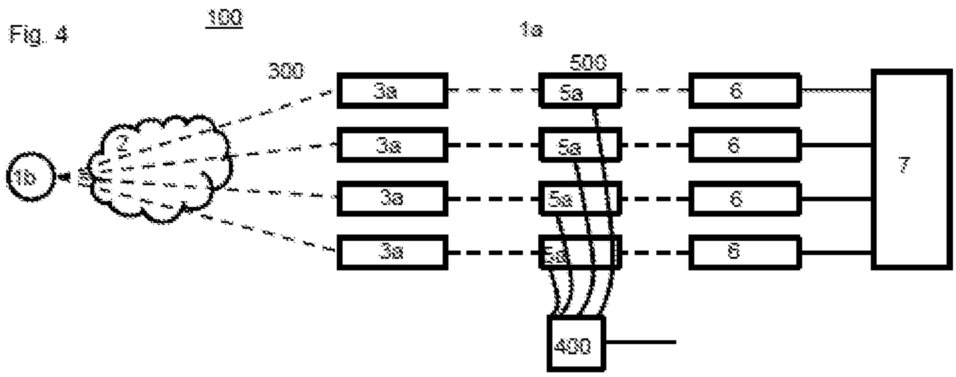

[Fig. 5]

Fig. 5

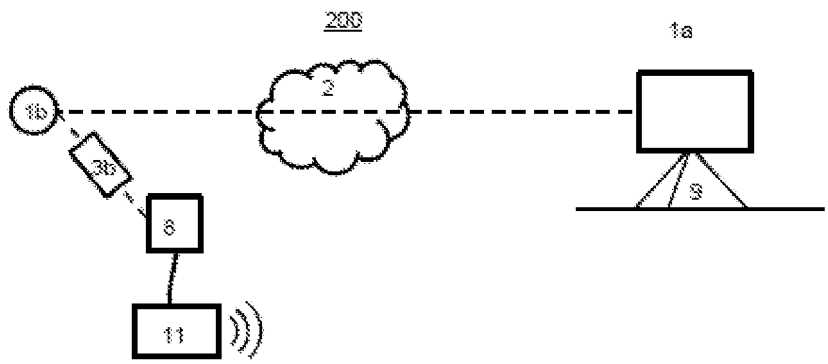

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 9869632 B2